(19) **Europäisches Patentamt / European Patent Office / Office européen des brevets**

(11) **EP 4 568 384 A1**

(12) **EUROPEAN PATENT APPLICATION**
published in accordance with Art. 153(4) EPC

(43) Date of publication:
**11.06.2025  Bulletin 2025/24**

(21) Application number: **23850502.8**

(22) Date of filing: **04.08.2023**

(51) International Patent Classification (IPC):
**H04W 72/04** (2023.01)    **H04W 72/23** (2023.01)
**H04L 5/00** (2006.01)    **H04L 5/14** (2006.01)

(52) Cooperative Patent Classification (CPC):
**H04L 5/00; H04L 5/14; H04W 72/04; H04W 72/23**

(86) International application number:
**PCT/KR2023/011534**

(87) International publication number:
**WO 2024/030002 (08.02.2024 Gazette 2024/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.08.2022  KR 20220098067**

(71) Applicant: Samsung Electronics Co., Ltd.
Suwon-si, Gyeonggi-do 16677 (KR)

(72) Inventors:
• CHOI, Kyungjun
  Suwon-si Gyeonggi-do 16677 (KR)
• SHIM, Jaeyeon
  Suwon-si Gyeonggi-do 16677 (KR)
• JI, Hyoungju
  Suwon-si Gyeonggi-do 16677 (KR)
• CHOE, Hyemin
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **SCHEDULING METHOD AND DEVICE FOR FULL DUPLEX COMMUNICATION IN WIRELESS COMMUNICATION SYSTEM**

(57)    The present disclosure relates to a 5G or 6G communication system for supporting higher data transmission rates. A method performed by a terminal in a wireless communication system is provided. The method comprises receiving, from a base station, downlink control information (DCI) for scheduling a physical uplink shared channel (PUSCH), the DCI comprising frequency domain resource assignment (FDRA) information for the PUSCH, in case that the PUSCH is scheduled to overlap uplink (UL) symbols, transmitting, to the base station, the PUSCH on first resource block groups (RBGs) identified based on the FDRA information and in case that the PUSCH is scheduled to overlap sub band full duplex (SBFD) symbols, transmitting, to the base station, the PUSCH on second RBGs identified based on the FDRA information.

FIG.14

**Description**

[Technical Field]

The disclosure relates to operations of a UE and a base station in a wireless communication system. More specifically, the disclosure relates to method for enabling a UE to allocate resources and a device capable of performing the same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

In the initial stage of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

The disclosure provides a device and a method capable of effectively providing services in a mobile communication system.

[Solution to Problem]

According to an embodiment, a method performed by a terminal in a wireless communication system is provided. The method may include receiving downlink control information (DCI) for scheduling a physical uplink shared channel (PUSCH) from a base station, in case that the PUSCH is scheduled to overlap uplink (UL) symbols, transmitting the PUSCH to the base station on first resource block groups (RBGs) identified based on the FDRA information, and in case that the PUSCH is scheduled to overlap sub band full duplex (SBFD) symbols, transmitting the PUSCH to the base station on second RBGs identified based on the FDRA information. The DCI may include frequency domain resource assignment (FDRA) information for the PUSCH.

According to an embodiment, a terminal in a wireless communication system may include a transceiver and a controller coupled to the transceiver. The controller may be configured to receive downlink control information (DCI) for scheduling a physical uplink shared channel (PUSCH) from a base station, in case that the PUSCH is scheduled to overlap uplink (UL) symbols, transmit the PUSCH to the base station on first resource block groups (RBGs) identified based frequency domain resource assignment (FDRA) information for the PUSCH, included in the DCI, and in case that the PUSCH is scheduled to overlap sub band full duplex (SBFD) symbols, transmit the PUSCH to the base station on second RBGs identified based on the FDRA information.

According to an embodiment, a method performed by a base station in a wireless communication system is provided. The method may include transmitting downlink control information (DCI) for scheduling a physical uplink shared channel (PUSCH) to a terminal, in case that the PUSCH is scheduled to overlap uplink (UL) symbols, receiving the PUSCH from the terminal on first resource block groups (RBGs) based on the FDRA information, and in case that the PUSCH is scheduled to overlap sub band full duplex (SBFD) symbols, receiving the PUSCH from the terminal on second RBGs based on the FDRA information. The DCI may include frequency domain resource assignment (FDRA) information for the PUSCH.

According to an embodiment, a base station in a wireless communication system may include a transceiver and a controller coupled to the transceiver. The controller may be configured to transmit downlink control information (DCI) for scheduling a physical uplink shared channel (PUSCH) to a terminal, in case that the PUSCH is scheduled to overlap uplink (UL) symbols, receive the PUSCH from the terminal on first resource block groups (RBGs) based frequency domain resource assignment (FDRA) information for the PUSCH, included in the DCI, and in case that the PUSCH is scheduled to overlap sub band full duplex (SBFD) symbols, receive the PUSCH from the terminal on second RBGs based on the FDRA information.

[Advantageous Effects of Invention]

The disclosure can provide a device and a method capable of effectively providing services in a wireless communication system.

Advantageous effects obtainable from the disclosure may not be limited to the above-mentioned effects, and other effects which are not mentioned may be clearly understood from the following descriptions by those skilled in the art to which the disclosure pertains.

[Brief Description of Drawings]

FIG. 1 illustrates a basic structure of a time-frequency domain in a wireless communication system according to an embodiment of the disclosure.
FIG. 2 illustrates a structure of a frame, a subframe, and a slot in a wireless communication system according to an embodiment of the disclosure.
FIG. 3 illustrates an example of a bandwidth part configuration in a wireless communication system according to an embodiment of the disclosure.

FIG. 4 illustrates an example of a control resource set configuration of a downlink control channel in a wireless communication system according to an embodiment of the disclosure;

FIG. 5 illustrates a structure of a downlink control channel in a wireless communication system according to an embodiment of the disclosure.

FIG. 6 illustrates a method in which a base station and a UE transmit/receive data in consideration of a downlink data channel and a rate matching resource in a wireless communication system according to an embodiment of the disclosure.

FIG. 7 illustrates an example of frequency domain resource allocation with regard to a PDSCH in a wireless communication system according to an embodiment of the disclosure.

FIG. 8 illustrates an example of time domain resource allocation with regard to a PDSCH in a wireless communication system according to an embodiment of the disclosure.

FIG. 9 illustrates an example of time domain resource allocation according to a subcarrier spacing with regard to a data channel and a control channel in a wireless communication system according to an embodiment of the disclosure.

FIG. 10 illustrates radio protocol structures of a base station and a UE in single cell, carrier aggregation, and dual connectivity situations in a wireless communication system according to an embodiment of the disclosure.

FIG. 11 illustrates a TDD configuration and an SBFD configuration according to an embodiment of the disclosure.

FIG. 12 illustrates an SBFD configuration according to an embodiment of the disclosure.

FIG. 13 illustrates an RBG configuration according to an embodiment of the disclosure.

FIG. 14 is a flowchart of a type-0 resource allocation scheduling method according to an embodiment of the disclosure.

FIG. 15 illustrates an SBFD configuration according to an embodiment of the disclosure.

FIG. 16 illustrates an SBFD configuration according to an embodiment of the disclosure.

FIG. 17 illustrates an RIV configuration according to an embodiment of the disclosure.

FIG. 18 is a flowchart of a type-1 resource allocation scheduling method according to an embodiment of the disclosure.

FIG. 19 illustrates a structure of a UE in a wireless communication system according to an embodiment of the disclosure.

FIG. 20 illustrates a structure of a base station in a wireless communication system according to an embodiment of the disclosure.

[Mode for the Invention]

Hereinafter, embodiments of the disclosure will be described in detail with reference to the accompanying drawings.

In describing the embodiments of the disclosure, descriptions related to technical contents well-known in the relevant art and not associated directly with the disclosure will be omitted. Such an omission of unnecessary descriptions is intended to prevent obscuring of the main idea of the disclosure and more clearly transfer the main idea.

For the same reason, in the accompanying drawings, some elements may be exaggerated, omitted, or schematically illustrated. Furthermore, the size of each element does not completely reflect the actual size. In the respective drawings, the same or corresponding elements are assigned the same reference numerals.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements. Furthermore, in describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the disclosure, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that, as an alternative, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in the embodiments may include one or more processors.

A wireless communication system is advancing to a broadband wireless communication system for providing high-speed and high-quality packet data services using communication standards, such as high-speed packet access (HSPA) of 3GPP, LTE (long-term evolution or evolved universal terrestrial radio access (E-UTRA)), LTE-Advanced (LTE-A), LTE-Pro, high-rate packet data (HRPD) of 3GPP2, ultra-mobile broadband (UMB), IEEE 802.16e, and the like, as well as typical voice-based services.

As a typical example of the broadband wireless communication system, an LTE system employs an orthogonal frequency division multiplexing (OFDM) scheme in a downlink (DL) and employs a single carrier frequency division multiple access (SC-FDMA) scheme in an uplink (UL). The uplink refers to a radio link via which a user equipment (UE) or a mobile station (MS) transmits data or control signals to a base station (BS) or eNode B, and the downlink refers to a radio link via which the base station transmits data or control signals to the UE. The above multiple access scheme may separate data or control information of respective users by allocating and operating time-frequency resources for transmitting the data or control information for each user so as to avoid overlapping each other, that is, so as to establish orthogonality.

Since a 5G communication system, which is a post-LTE communication system, must freely reflect various requirements of users, service providers, and the like, services satisfying various requirements must be supported. The services considered in the 5G communication system include enhanced mobile broadband (eMBB) communication, massive machine-type communication (mMTC), ultra-reliability low-latency communication (URLLC), and the like.

eMBB aims at providing a data rate higher than that supported by existing LTE, LTE-A, or LTE-Pro. For example, in the 5G communication system, eMBB must provide a peak data rate of 20 Gbps in the downlink and a peak data rate of 10 Gbps in the uplink for a single base station. Furthermore, the 5G communication system must provide an increased user-perceived data rate to the UE, as well as the maximum data rate. In order to satisfy such requirements, transmission/reception technologies including a further enhanced multi-input multi-output (MIMO) transmission technique are required to be improved. Also, the data rate required for the 5G communication system may be obtained using a frequency bandwidth more than 20 MHz in a frequency band of 3 to 6 GHz or 6 GHz or more, instead of transmitting signals using a transmission bandwidth up to 20 MHz in a band of 2 GHz used in LTE.

In addition, mMTC is being considered to support application services such as the Internet of Things (IoT) in the 5G communication system. mMTC has requirements, such as support of connection of a large number of UEs in a cell, enhancement coverage of UEs, improved battery time, a reduction in the cost of a UE, and the like, in order to effectively provide the Internet of Things. Since the Internet of Things provides communication functions while being provided to various sensors and various devices, it must support a large number of UEs (e.g., 1,000,000 UEs/km$^2$) in a cell. In addition, the UEs supporting mMTC may require wider coverage than those of other services provided by the 5G communication system because the UEs are likely to be located in a shadow area, such as a basement of a building, which is not covered by the cell due to the nature of the service. The UE supporting mMTC must be configured to be inexpensive, and may require a very long battery life-time such as 10 to 15 years because it is difficult to frequently replace the battery of the UE.

Lastly, URLLC is a cellular-based mission-critical wireless communication service. For example, URLLC may be used for services such as remote control for robots or machines, industrial automation, unmanned aerial vehicles, remote health care, and emergency alert. Thus, URLLC must provide communication with ultra-low latency and ultra-high reliability. For example, a service supporting URLLC must satisfy an air interface latency of less than 0.5 ms, and may also requires a packet error rate of 10$^{-5}$ or less. Therefore, for the services supporting URLLC, a 5G system must provide a transmit time interval (TTI) shorter than those of other services, and also may require a design for assigning a large number of resources in a frequency band in order to secure reliability of a communication link.

The three services in 5G, that is, eMBB, URLLC, and mMTC, may be multiplexed and transmitted in a single system. In this case, different transmission/reception techniques and transmission/reception parameters may be used between services in order to satisfy different requirements of the respective services. Of course, 5G is not limited to the three services described above.

[NR time-frequency resources]

Hereinafter, a frame structure of a 5G system will be described in more detail with reference to the accompanying drawings.

The disclosure proposes a scheduling method in subband non-overlapping full duplex (SBFD).

According to an embodiment, an SBFD-capable UE may have an SBFD UL subband configured therefor, and may transmit an uplink channel through the SBFD UL subband. The SBFD UL subband may have a bandwidth configured to be smaller than the bandwidth of a UL bandwidth part (BWP). Therefore, the UE needs to receive scheduling information regarding all frequency resources in the UL BWP, and also needs to receive scheduling information regarding all frequency resources in the SBFD UL subband.

The disclosure proposes a method for interpreting frequency resource allocation information in the SBFD UL subband by using an FDRA field determined according to frequency resources of the UL BWP.

In the first embodiment of the disclosure, a UE may group frequency resources included in the SBFD UL subband, and each group's scheduling information may be indicted by each bit of the FDRA field. The number of groups may be identical to the number of bits of the FDRA field.

In the second embodiment of the disclosure, a UE may group frequency resources included in the SBFD UL subband, and each group's scheduling information may be indicted by each bit of the FDRA field. The number of frequency resources included in the number of groups has the value of one of 2, 4, 8, and 16, and the smallest value among values configured such that the number of groups is smaller than or equal to the number of bits of the FDRA field may be selected.

In the third embodiment of the disclosure, a UE may group frequency resources included in the SBFD UL subband, and each group's scheduling information may be indicted by each bit of the FDRA field. The number of frequency resources included in the number of groups may be configured by the upper layer. Furthermore, the number of bits of the FDRA field may be determined to be the larger value between the number of bits of the FDRA field determined by frequency resources of the UL BWP, and the number of groups.

It is obvious to those skilled in the art that embodiments of the disclosure can be combined with each other without contradiction.

Above descriptions and development of wireless communication systems have made it possible to provide various services, and a scheme for efficiently providing services are requested.

A method performed by a UE in a wireless communication system according to an embodiment of the disclosure may include an operation of determining the number of resource block groups (RBGs) based on an uplink bandwidth part (BWP), an operation of determining the bit number of a frequency domain resource assignment (FDRA) field based on the determined number of RBGs, and an operation of grouping resource blocks of an uplink subcarrier based on the determined bit number.

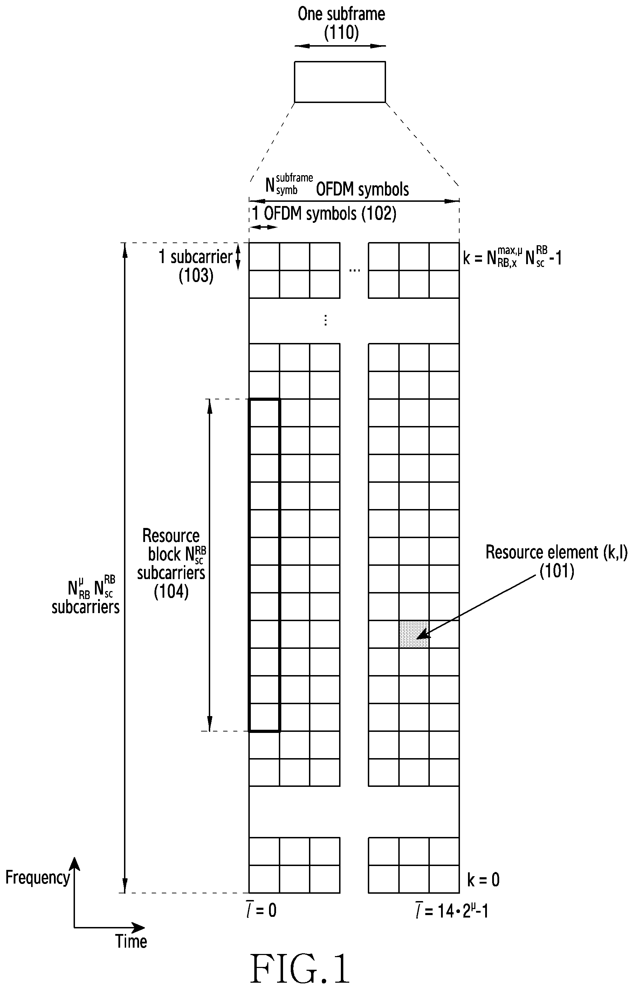

FIG. 1 illustrates a basic structure of a time-frequency domain in a wireless communication system according to an embodiment of the disclosure. More specifically, FIG. 1 illustrates a basic structure of a time-frequency domain, which is a radio resource domain used to transmit data or control channels, in a 5G system.

Referring to FIG. 1, the horizontal axis in FIG. 1 represents a time domain, and the vertical axis in FIG. 1 represents a frequency domain. The basic unit of resources in the time-frequency domain is a resource element (RE) 101, which may be defined as one orthogonal frequency division multiplexing (OFDM) symbol 102 on the time axis and one subcarrier 103 on the frequency axis. In the frequency domain, $N_{SC}^{RB}$ (for example, 12) consecutive REs may constitute one resource block (RB) 104.

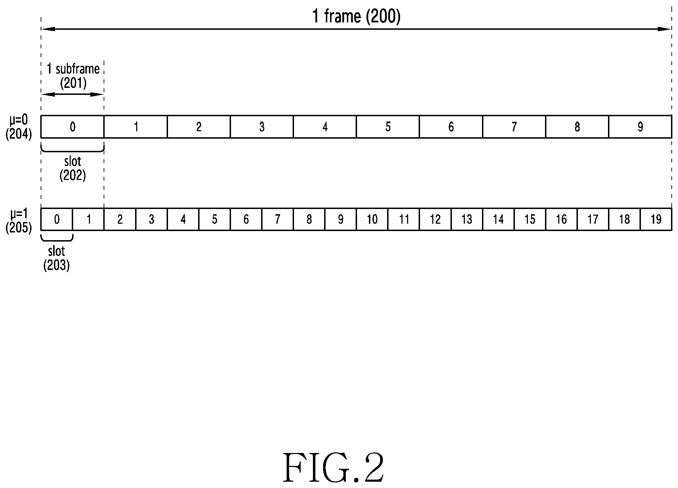

FIG. 2 illustrates a structure of a frame, a subframe, and a slot in a wireless communication system according to an embodiment of the disclosure.

An example of a structure of a frame 200, a subframe 201, and a slot 202 is illustrated in FIG. 2. One frame 200 may be defined as 10ms. One subframe 201 may be defined as 1ms, and thus one frame 200 may include a total of ten subframes 201. One slot 202 or 203 may be defined as 14 OFDM symbols (that is, the number of symbols per one slot $N_{symb}^{slot}=14$). One subframe 201 may include one or multiple slots 202 and 203, and the number of slots 202 and 203 per one subframe 201 may vary depending on configuration values $\mu$ for the subcarrier spacing 204 or 205. The example in FIG. 2 illustrates a case in which the subcarrier spacing configuration value is $\mu=0$ (204), and a case in which $\mu=1$ (205). In the case of $\mu=0$ (204), one subframe 201 may include one slot 202, and in the case of $\mu=1$ (205), one subframe 201 may include two slots 203. That is, the number of slots per one subframe $N_{slot}^{subframe,\mu}$ may differ depending on the subcarrier spacing configuration value $\mu$, and the number of slots per one frame $N_{slot}^{frame,\mu}$ may differ accordingly. $N_{slot}^{subframe,\mu}$ and $N_{slot}^{frame,\mu}$ may be defined according to each subcarrier spacing configuration $\mu$ as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth part (BWP)]

Next, a bandwidth part (BWP) configuration in a 5G communication system will be described in detail with reference to the accompanying drawings.

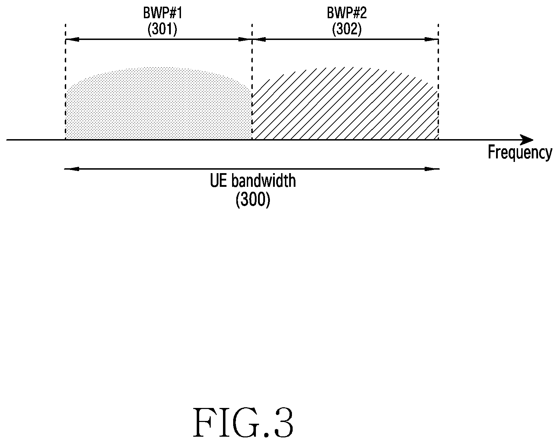

FIG. 3 illustrates an example of a bandwidth part configuration in a wireless communication system according to an embodiment of the disclosure.

FIG. 3 illustrates an example in which a UE bandwidth 300 is configured to include two bandwidth parts, that is, bandwidth part #1 (BWP#1) 301 and bandwidth part #2 (BWP#2) 302. A base station may configure one or multiple bandwidth parts for a UE, and may configure the following pieces of information with regard to each bandwidth part as given in Table 2 below.

[Table 2]

```
BWP ::=                          SEQUENCE {

        bwp-Id                        BWP-Id,
         (bandwidth part identifier)

        locationAndBandwidth          INTEGER (1..65536),
        (bandwidth part location)

        subcarrierSpacing             ENUMERATED {n0, n1, n2, n3, n4, n5},
        (subcarrier spacing)

        cyclicPrefix                  ENUMERATED { extended }
        (cyclic prefix)

}
```

Of course, the bandwidth part configuration is not limited to the above example, and in addition to the configuration information in Table 2, various parameters related to the bandwidth part may be configured for the UE. The base station may transfer the configuration information to the UE through upper layer signaling, for example, radio resource control (RRC) signaling. One configured bandwidth part or at least one bandwidth part among multiple configured bandwidth parts may be activated. Whether or not the configured bandwidth part is activated may be transferred from the base station to the UE semi-statically through RRC signaling, or dynamically through downlink control information (DCI).

According to an embodiment, before a radio resource control (RRC) connection, an initial bandwidth part (BWP) for initial access may be configured for the UE by the base station through a master information block (MIB). For example, the UE may receive configuration information regarding a control resource set (CORESET) and a search space which may be used to transmit a PDCCH for receiving system information (which may correspond to remaining system information (RMSI) or system information block 1 (SIB1) necessary for initial access through the MIB in the initial access step. Each of the control resource set and the search space configured through the MIB may be considered (or identified) identity (ID) 0. The base station may notify the UE of configuration information, such as frequency allocation information, time allocation information, and numerology, regarding CORESET #0 through the MIB. In addition, the base station may notify the UE of configuration information regarding the monitoring cycle and occasion with regard to control resource set #0, that is, configuration information regarding search space #0, through the MIB. The UE may consider that a frequency domain configured by control resource set #0 acquired from the MIB is an initial bandwidth part for initial access. The ID of the initial bandwidth part may be considered (or identified) to be 0.

According to various embodiments of the disclosure, the bandwidth part-related configuration supported by 5G may be used for various purposes.

According to an embodiment, in case that the bandwidth supported by the UE is smaller than the system bandwidth, this may be supported through the bandwidth part configuration. For example, the base station may configure the frequency location (configuration information 2) of the bandwidth part for the UE, so that the UE can transmit/receive data at a specific frequency location within the system bandwidth.

In addition, according to an embodiment, the base station may configure multiple bandwidth parts for the UE for the purpose of supporting different numerologies. For example, in order to support a UE's data transmission/reception using both a subcarrier spacing of 15kHz and a subcarrier spacing of 30kHz, two bandwidth parts may be configured as subcarrier spacings of 15kHz and 30kHz, respectively. Different bandwidth parts may be subjected to frequency division multiplexing (FDM), and in case that data is to be transmitted/received at a specific subcarrier spacing, the bandwidth part configured as the corresponding subcarrier spacing may be activated.

In addition, according to an embodiment, the base station may configure bandwidth parts having different sizes of bandwidths for the UE for the purpose of reducing power consumed by the UE. For example, if the UE supports a substantially large bandwidth, for example, 100MHz, and always transmits/receives data with the corresponding bandwidth, a substantially large amount of power consumption may occur. Particularly, it may be substantially inefficient from the viewpoint of power consumption to unnecessarily monitor the downlink control channel with a large bandwidth of 100MHz in the absence of traffic. In order to reduce power consumed by the UE, the base station may configure a bandwidth part of a relatively small bandwidth (for example, a bandwidth part of 20MHz) for the UE. The UE may perform a monitoring operation in the 20MHz bandwidth part in the absence of traffic, and may transmit/receive data with the 100MHz bandwidth part as instructed by the base station if data has occurred.

In connection with the bandwidth part configuring method, UEs, before being RRC-connected, may receive configuration information regarding the initial bandwidth part through an MIB in the initial access step. For example, a UE may have a control resource set (CORESET) configured for a downlink control channel which may be used to transmit downlink control information (DCI) for scheduling a system information block (SIB) from the MIB of a physical broadcast channel (PBCH). The bandwidth of the control resource set configured by the MIB may be considered the initial bandwidth part, and the UE may receive, through the configured initial bandwidth part, a physical downlink shared channel (PDSCH) through which an SIB is transmitted. The initial bandwidth part may be used not only for the purpose of receiving the SIB, but also for other system information (OSI), paging, random access, or the like.

[Bandwidth part (BWP) change]

If a UE has one or more bandwidth parts configured therefor, the base station may indicate, to the UE, to change (or switch or transition) the bandwidth parts by using a bandwidth part indicator field inside DCI. As an example, if the currently activated bandwidth part of the UE is bandwidth part #1 301 in FIG. 3, the base station may indicate bandwidth part #2 302 with a bandwidth part indicator inside DCI, and the UE may change the bandwidth part to bandwidth part #2 302 indicated by the bandwidth part indicator inside received DCI.

As described above, DCI-based bandwidth part changing may be indicated by DCI for scheduling a PDSCH or a PUSCH, and thus, upon receiving a bandwidth part change request, the UE needs to be able to receive or transmit the PDSCH or PUSCH scheduled by the corresponding DCI in the changed bandwidth part with no problem. To this end, requirements for the delay time ($T_{BWP}$) required during a bandwidth part change are specified in standards, and may be defined given in Table 3 below, for example. However, Table 3 is merely an example, and the delay time required during a bandwidth part change is not limited thereto.

[Table 3]

| μ | NR Slot length (ms) | BWP switch delay $T_{BWP}$ (slots) | |
|---|---|---|---|
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the bandwidth part change delay time may support type 1 or type 2, depending on the capability of the UE. The UE may report the supportable bandwidth part change delay time type to the base station.

If the UE has received DCI including a bandwidth part change indicator in slot n, according to the above-described requirement regarding the bandwidth part change delay time, the UE may complete a change to the new bandwidth part indicated by the bandwidth part change indicator at a timepoint not later than slot n+TBWP, and may transmit/receive a data channel scheduled by the corresponding DCI in the newly changed bandwidth part. If the base station wants to schedule a data channel by using the new bandwidth part, the base station may determine time domain resource allocation regarding the data channel, based on the UE's bandwidth part change delay time (TBWP). That is, when scheduling a data channel by using the new bandwidth part, the base station may schedule the corresponding data channel after the bandwidth part change delay time, in connection with the method for determining time domain resource allocation regarding the data channel. Accordingly, the UE may not expect that the DCI that indicates a bandwidth part change will indicate a slot offset (K0 or K2) value smaller than the bandwidth part change delay time ($T_{BWP}$).

In case that the UE has received DCI (for example, DCI format 1_1 or 0_1) indicating a bandwidth part change, the UE may perform no transmission or reception during a time interval from the third symbol of the slot used to receive a PDCCH including the corresponding DCI to the start point of the slot indicated by a slot offset (K0 or K2) value indicated by a time domain resource allocation indicator field in the corresponding DCI. For example, if the UE has received DCI indicating a bandwidth part change in slot n, and if the slot offset value indicated by the corresponding DCI is K, the UE may perform no transmission or reception from the third symbol of slot n to the symbol before slot n+K (for example, the last symbol of slot n+K-1).

[SS/PBCH block]

Next, synchronization signal (SS)/PBCH blocks in 5G will be described.

An SS/PBCH block may refer to a physical layer channel block including a primary synchronization signal (PSS), a secondary synchronization signal (SSS), and a PBCH. Details thereof are as follows.

- PSS: a signal which becomes a reference of downlink time/frequency synchronization, and provides partial information of a cell ID.
- SSS: becomes a reference of downlink time/frequency synchronization, and provides remaining cell ID information not provided by the PSS. Additionally, the SSS may serve as a reference signal for PBCH demodulation of a PBCH.
- PBCH: provides an MIB which is mandatory system information necessary for the UE to transmit/receive data channels and control channels. The mandatory system information may include search space-related control information indicating a control channel's radio resource mapping information, scheduling control information regarding a separate data channel for transmitting system information, and the like.
- SS/PBCH block: the SS/PBCH block includes a combination of a PSS, an SSS, and a PBCH. One or multiple SS/PBCH blocks may be transmitted within a time period of 5 ms, and each transmitted SS/PBCH block may be distinguished by an index.

The UE may detect the PSS and the SSS in the initial access stage, and may decode the PBCH. The UE may acquire an MIB from the PBCH, and this may be used to configure control resource set (CORESET) #0 (which may correspond to a control resource set having a control resource set index of 0). The UE may monitor control resource set #0 by assuming that the demodulation reference signal (DMRS) transmitted in the selected SS/PBCH block and control resource set #0 are quasi-co-located (QCL). The UE may receive system information with downlink control information transmitted in control resource set #0. The UE may acquire configuration information related to a random access channel (RACH) necessary for initial access from the received system information. The UE may transmit a physical RACH (PRACH) to the base station in consideration of a selected SS/PBCH index, and the base station, upon receiving the PRACH, may acquire information regarding the SS/PBCH block index selected by the UE. The base station may know which block the UE has selected from respective SS/PBCH blocks, and the fact that control resource set #0 associated therewith is monitored.

[PDCCH: regarding DCI]

Next, downlink control information (DCI) in a 5G system will be described in detail.

In a 5G system, scheduling information regarding uplink data (or physical uplink shared channel (PUSCH)) or downlink data (or physical downlink shared channel (PDSCH)) is included in DCI and transferred from a base station to a UE through the DCI. The UE may monitor, with regard to the PUSCH or PDSCH, a fallback DCI format and a non-fallback DCI format. The fallback DCI format may include a fixed field predefined between the base station and the UE, and the non-fallback DCI format may include a configurable field.

The DCI may be subjected to channel coding and modulation processes and then transmitted through a physical downlink control channel (PDCCH) after a channel coding and modulation process. A cyclic redundancy check (CRC) may be attached to the payload of a DCI message, and the CRC may be scrambled by a radio network temporary identifier (RNTI) corresponding to the identity of the UE. Different RNTIs may be used according to the purpose of the DCI message, for example, UE-specific data transmission, power control command, or random access response. That is, the RNTI may not be explicitly transmitted, but may be transmitted while being included in a CRC calculation process. Upon receiving a DCI message transmitted through the PDCCH, the UE may identify the CRC by using the allocated RNTI, and if the CRC identification result is right, the UE may know that the corresponding message has been transmitted to the UE.

For example, DCI for scheduling a PDSCH regarding system information (SI) may be scrambled by an SI-RNTI. DCI for scheduling a PDSCH regarding a random access response (RAR) message may be scrambled by an RA-RNTI. DCI for scheduling a PDSCH regarding a paging message may be scrambled by a P-RNTI. DCI for notifying of a slot format indicator (SFI) may be scrambled by an SFI-RNTI. DCI for notifying of transmit power control (TPC) may be scrambled by a TPC-RNTI. DCI for scheduling a UE-specific PDSCH or PUSCH may be scrambled by a cell RNTI (C-RNTI).

DCI format 0_0 may be used as fallback DCI for scheduling a PUSCH, and in this case, the CRC may be scrambled by a C-RNTI. DCI format 0_0 in which the CRC is scrambled by a C-RNTI may include the following pieces of information given in Table 4 below, for example.

[Table 4]

| - Identifier for DCI formats - [1] bit |
| --- |

(continued)

- Frequency domain resource assignment - $[\lceil \log_2(N_{RB}^{UL,BWP}(N_{RB}^{UL,BWP}+1)/2) \rceil ]$ bits
- Time domain resource assignment - X bits
- Frequency hopping flag - 1 bit.
- Modulation and coding scheme - 5 bits
- New data indicator - 1 bit
- Redundancy version - 2 bits
- HARQ process number - 4 bits
- Transmit power control (TPC) command for scheduled PUSCH - [2] bits
- Uplink/ supplementary uplink (UL/SUL) indicator - 0 or 1 bit

DCI format 0_1 may be used as non-fallback DCI for scheduling a PUSCH, and in this case, the CRC may be scrambled by a C-RNTI. DCI format 0_1 in which the CRC is scrambled by a C-RNTI may include the following pieces of information given in Table 5 below, for example.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

  • For resource allocation type 0, $\lceil N_{RB}^{UL,BWP}/P \rceil$ bits

  • For resource allocation type 1, $\lceil \log_2(N_{RB}^{UL,BWP}(N_{RB}^{UL,BWP}+1)/2) \rceil$ bits
- Time domain resource assignment -1, 2, 3, or 4 bits
- Virtual resource block (VRB)-to-physical resource block (PRB) mapping - 0 or 1 bit, only for resource allocation type 1.

  • 0 bit if only resource allocation type 0 is configured;

  • 1 bit otherwise.
- Frequency hopping flag - 0 or 1 bit, only for resource allocation type 1.

  • 0 bit if only resource allocation type 0 is configured;

  • 1 bit otherwise.
- Modulation and coding scheme - 5 bits
- New data indicator - 1 bit
- Redundancy version - 2 bits
- HARQ process number - 4 bits
- 1st downlink assignment index- 1 or 2 bits

  • 1 bit for semi-static HARQ-ACK codebook;

  • 2 bits for dynamic HARQ-ACK codebook with single HARQ-ACK codebook.
- 2nd downlink assignment index - 0 or 2 bits

  • 2 bits for dynamic HARQ-ACK codebook with two HARQ-ACK sub-codebooks;

  • 0 bit otherwise.
- TPC command for scheduled PUSCH - 2 bits

- SRS resource indicator - $\left\lceil \log_2\left( \sum_{k=1}^{L_{max}} \binom{N_{SRS}}{k} \right) \right\rceil$ or $\lceil \log_2(N_{SRS}) \rceil$ bits

  • $\left\lceil \log_2\left( \sum_{k=1}^{L_{max}} \binom{N_{SRS}}{k} \right) \right\rceil$ bits for non-codebook based PUSCH transmission;

(continued)

$$\bullet \quad \lceil \log_2(N_{\text{SRS}}) \rceil \text{ bits for codebook based PUSCH transmission.}$$

- Precoding information and number of layers - up to 6 bits
- Antenna ports - up to 5 bits
- SRS request - 2 bits
- Channel state information (CSI) request - 0, 1, 2, 3, 4, 5, or 6 bits
- Code block group (CBG) transmission information - 0, 2, 4, 6, or 8 bits
- Phase tracking reference signal (PTRS)-demodulation reference signal (DDMRS) association - 0 or 2 bits.
- beta_offset indicator - 0 or 2 bits
- DMRS sequence initialization - 0 or 1 bit

DCI format 1_0 may be used as fallback DCI for scheduling a PDSCH, and in this case, the CRC may be scrambled by a C-RNTI. DCI format 1_0 in which the CRC is scrambled by a C-RNTI may include the following pieces of information given in Table 6 below, for example.

[Table 6]

- Identifier for DCI formats - [1] bit

- Frequency domain resource assignment - $[\lceil \log_2(N_{\text{RB}}^{\text{DL,BWP}}(N_{\text{RB}}^{\text{DL,BWP}}+1)/2) \rceil ]$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Pysical uplink control channel (PUCCH) resource indicator - 3 bits
- PDSCH-to-HARQ feedback timing indicator - [3] bits

DCI format 1_1 may be used as non-fallback DCI for scheduling a PDSCH, and in this case, the CRC may be scrambled by a C-RNTI. DCI format 1_1 in which the CRC is scrambled by a C-RNTI may include the following pieces of information given in Table 7 below, for example.

[Table 7]

- Carrier indicator - 0 or 3 bits
- Identifier for DCI formats - [1] bits
- Bandwidth part indicator - 0, 1 or 2 bits
- Frequency domain resource assignment

    • For resource allocation type 0, $\lceil N_{\text{RB}}^{\text{DL,BWP}}/P \rceil$ bits

    • For resource allocation type 1, $\lceil \log_2(N_{\text{RB}}^{\text{DL,BWP}}(N_{\text{RB}}^{\text{DL,BWP}}+1)/2) \rceil$ bits
- Time domain resource assignment -1, 2, 3, or 4 bits
- VRB-to-PRB mapping - 0 or 1 bit, only for resource allocation type 1.
    • 0 bit if only resource allocation type 0 is configured;
    • 1 bit otherwise.
- Physical resource block (PRB) bundling size indicator - 0 or 1 bit
- Rate matching indicator - 0, 1, or 2 bits
- Zero power (ZP) channel state information (CSI)-reference signal (RS) trigger - 0, 1, or 2 bits
For transport block 1:

(continued)

> - Modulation and coding scheme - 5 bits
> - New data indicator - 1 bit
> - Redundancy version - 2 bits
>
> For transport block 2:
>
> - Modulation and coding scheme - 5 bits
> - New data indicator - 1 bit
> - Redundancy version - 2 bits
>
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

[PDCCH: CORESET, REG, CCE, and Search Space]

Hereinafter, a downlink control channel in a 5G communication system will be described.

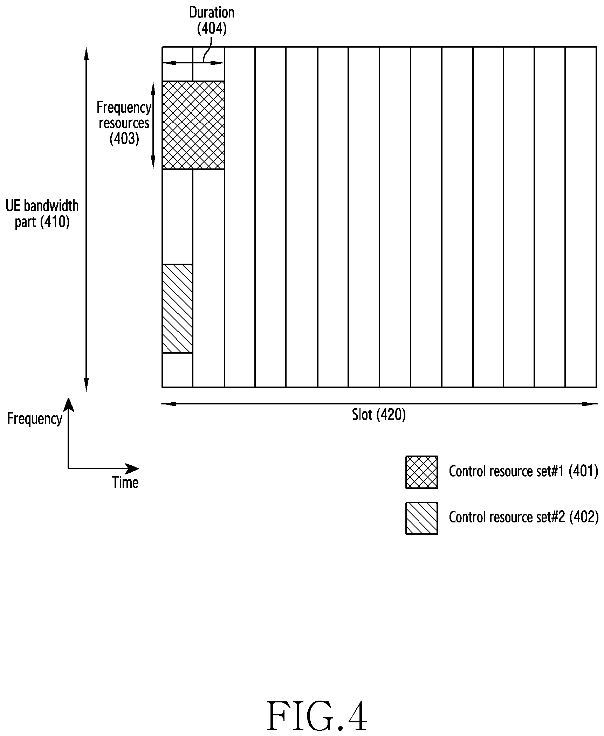

FIG. 4 illustrates an example of a control resource set (CORESET) used to transmit a downlink control channel in a 5G wireless communication system. FIG. 4 illustrates an example in which a UE bandwidth part 410 is configured along the frequency axis, and two control resource sets (control resource set #1 420 and control resource set #2 401) are configured within one slot 402 along the time axis. The control resource sets 401 and 402 may be configured in a specific frequency resource 410 within the entire UE bandwidth part 403 along the frequency axis. The control resource sets may be each configured as one or multiple OFDM symbols along the time domain, and the number of the OFDM symbols may be defined as a control resource set duration 404. Referring to the example illustrated in FIG. 4, control resource set #1 401 is configured to have a control resource set duration corresponding to two symbols, and control resource set #2 402 is configured to have a control resource set duration corresponding to one symbol.

A control resource set in 5G described above may be configured for a UE by a base station through upper layer signaling (for example, system information, master information block (MIB), radio resource control (RRC) signaling). The description that a control resource set is configured for a UE may mean that information such as a control resource set identity, the control resource set's frequency location, and the control resource set's symbol duration is provided. For example, the provided information may include the following pieces of information: given in Table 8 below.

[Table 8]

```
ControlResourceSet ::=                   SEQUENCE {

-- Corresponds to L1 parameter 'CORESET-ID'


controlResourceSetId                ControlResourceSetId,

    (control resource set identity)

frequencyDomainResources            BIT STRING (SIZE (45)),

    (frequency domain resource assignment information)

duration                            INTEGER (1..maxCoReSetDuration),

    (time domain resource assignment information)

cce-REG-MappingType                        CHOICE {

    (CCE-to-REG mapping type)

    interleaved                     SEQUENCE {
```

reg-BundleSize                          ENUMERATED  {n2,  n3,  n6},

(REG bundle size)

precoderGranularity                     ENUMERATED  {sameAsREG-

bundle,  allContiguousRBs},

interleaverSize                         ENUMERATED  {n2,  n3,  n6}

(interleaver size)

shiftIndex                              INTEGER(0..maxNrofPhysicalR

esourceBlocks-1)                        OPTIONAL

(interleaver shift)

},

nonInterleaved                          NULL

},

tci-StatesPDCCH                         SEQUENCE(SIZE  (1..maxNrof

TCI-StatesPDCCH))  OF  TCI-StateId          OPTIONAL,

(QCL configuration information)

tci-PresentInDCI                        E N U M E R A T E D   { e n a b l e d }

}

In Table 8, tci-StatesPDCCH (simply referred to as transmission configuration indication (TCI) state) configuration information may include information of one or multiple SS/PBCH block indexes or channel state information reference signal (CSI-RS) indexes, which are quasi-co-located (OCLed) with a DMRS transmitted in a corresponding CORESET.

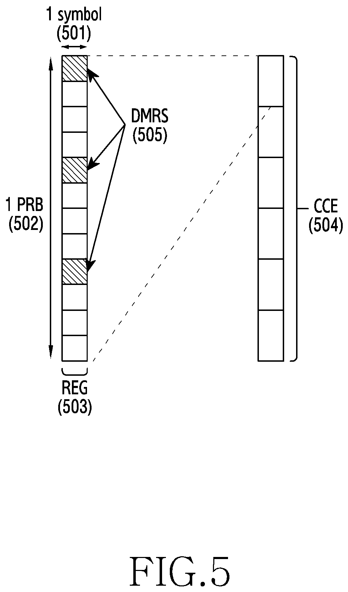

FIG. 5 illustrates an example of a basic unit of time and frequency resources constituting a downlink control channel available in 5G. According to FIG. 5, the basic unit of time and frequency resources constituting a control channel may be referred to as a resource element group (REG) 503, and the REG 503 may be defined by one OFDM symbol 501 along the time axis and one physical resource block (PRB) 502, that is, 12 subcarriers, along the frequency axis. The base station may configure a downlink control channel allocation unit by concatenating the REGs 503.

Provided that the basic unit of downlink control channel allocation in 5G is a control channel element 504 as illustrated in FIG. 5, one CCE 504 may include multiple REGs 503. To describe the REG 503 illustrated in FIG. 5, for example, the REG 503 may include 12 REs, and if one CCE 504 includes six REGs 503, one CCE 504 may then include 72 REs. A downlink control resource set, once configured, may include multiple CCEs 504, and a specific downlink control channel may be mapped to one or multiple CCEs 504 and then transmitted according to the aggregation level (AL) in the control resource set. The CCEs 504 in the control resource set are distinguished by numbers, and the numbers of CCEs 504 may be allocated according to a logical mapping scheme.

The basic unit of the downlink control channel illustrated in FIG. 5, that is, the REG 503, may include both REs to which DCI is mapped, and an area to which a reference signal (DMRS 505) for decoding the same is mapped. Referring to FIG. 5, three DRMSs 503 may be transmitted inside one REG 505. The number of CCEs necessary to transmit a PDCCH may be 1, 2, 4, 8, or 16 according to the aggregation level (AL), and different number of CCEs may be used to implement link adaption of the downlink control channel. For example, in the case of AL=L, one downlink control channel may be transmitted through L CCEs. The UE needs to detect a signal while being no information regarding the downlink control channel, and thus a search space indicating a set of CCEs may be defined for blind decoding. The search space may be a set of downlink control channel candidates including CCEs that the UE must attempt to decode in a given aggregation level. Since there are various aggregation levels making one bundle of 1, 2, 4, 8, or 16 CCEs, the UE may have a plurality of search spaces. A search space set may be defined as a set of search spaces at all configured aggregation levels.

Search spaces may be classified into common search spaces and UE-specific search spaces. A group of UEs or all UEs may search a common search space of the PDCCH in order to receive cell-common control information such as dynamic scheduling regarding system information or a paging message. For example, PDSCH scheduling allocation information for transmitting an SIB including a cell operator information or the like may be received by searching the common search space of the PDCCH. In the case of a common search space, a group of UEs or all UEs need to receive the PDCCH, and the common search space may thus be defined as a predetermined set of CCEs. Scheduling allocation information regarding a UE-specific PDSCH or PUSCH may be received by searching the UE-specific search space of the PDCCH. The UE-specific search space may be defined UE-specifically as a function of various system parameters and the identity of the UE.

In 5G, parameters for a search space regarding a PDCCH may be configured for the UE by the base station through upper layer signaling (for example SIB, MIB, or RRC signaling). For example, the base station may configure, for the UE, the number of PDCCH candidates at each aggregation level L, the monitoring cycle regarding the search space, the monitoring occasion with regard to each symbol in a slot regarding the search space, the search space type (common search space or UE-specific search space), a combination of an RNTI and a DCI format to be monitored in the corresponding search space, and/or a control resource set index for monitoring the search space, etc. For example, parameters of the search space for the PDCCH may include the following pieces of information given in Table 9 below. However, this is merely an example, and the parameters of the search space may exclude some of the pieces of information in Table 9 or may further include other pieces of information in addition to the pieces of information in Table 9.

[Table 9]

| |
|---|
| SearchSpace  ::=                                    SEQUENCE  { <br>    -- Identity of the search space. SearchSpaceId = 0 identifies the SearchSpace <br> configured via PBCH (MIB) or ServingCellConfigCommon. <br>    searchSpaceId                              SearchSpaceId, <br>    (search space identity) <br>    controlResourceSetId                ControlResourceSetId, <br>    (control resource set identity) <br>    monitoringSlotPeriodicityAndOffset        CHOICE  { |

(monitoring slot level periodicity)

| | |
|---|---|
| sl1 | NULL, |
| sl2 | INTEGER (0..1), |
| sl4 | INTEGER (0..3), |
| sl5 | INTEGER (0..4), |
| sl8 | INTEGER (0..7), |
| sl10 | INTEGER (0..9), |
| sl16 | INTEGER (0..15), |
| sl20 | INTEGER (0..19) |

}

OPTIONAL,

duration (monitoring duration)                    INTEGER (2..2559)

monitoringSymbolsWithinSlot                    BIT STRING (SIZE (14))

OPTIONAL,

(monitoring symbols within slot)

nrofCandidates                    SEQUENCE {

(number of PDCCH candidates for each aggregation level)

aggregationLevel1                    ENUMERATED {n0, n1, n2, n3, n4, n5, n6, n8},

aggregationLevel2                    ENUMERATED {n0, n1, n2, n3, n4, n5, n6, n8},

aggregationLevel4                    ENUMERATED {n0, n1, n2, n3, n4, n5, n6, n8},

aggregationLevel8                    ENUMERATED {n0, n1, n2, n3, n4, n5, n6, n8},

aggregationLevel16                    ENUMERATED {n0, n1, n2, n3, n4, n5, n6, n8}

},

searchSpaceType                    CHOICE {

(search space type)

-- Configures this search space as common search space (CSS) and DCI formats to monitor.

```
        common                          SEQUENCE {
(common search space)
        }
        ue-Specific                     SEQUENCE {
(UE-specific search space)
            -- Indicates whether the UE monitors in this USS for DCI formats 0-0 and 1-0 or
for formats 0-1 and 1-1.
        formats                         ENUMERATED  {formats0-0-And-
1-0,  formats0-1-And-1-1},
        ...
        }
```

According to configuration information, the base station may configure one or multiple search space sets for the UE. According to an embodiment, the base station may configure search space set 1 and search space set 2 for the UE, may configure DCI format A scrambled by an X-RNTI to be monitored in a common search space in search space set 1. The base station may configure DCI format B scrambled by a Y-RNTI to be monitored in a UE-specific search space in search space set 2.

According to configuration information, one or multiple search space sets may exist in a common search space or a UE-specific search space. For example, search space set #1 and search space set #2 may be configured as a common search space, and search space set #3 and search space set #4 may be configured as a UE-specific search space.

Combinations of DCI formats and RNTIs given below may be monitored in a common search space. Of course, the combinations of DCI formats and RNTIs monitored in a common search space are not limited to the examples given below.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

Combinations of DCI formats and RNTIs given below may be monitored in a UE-specific search space. Of course, the combinations of DCI formats and RNTIs monitored in a UE-specific search space are not limited to the examples given below.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

Enumerated RNTIs may follow the definition and usage given below.

Cell RNTI (C-RNTI): used to schedule a UE-specific PDSCH
Temporary cell RNTI (TC-RNTI): used to schedule a UE-specific PDSCH
Configured scheduling RNTI (CS-RNTI): used to schedule a semi-statically configured UE-specific PDSCH
Random access RNTI (RA-RNTI): used to schedule a PDSCH in a random access step
Paging RNTI (P-RNTI): used to schedule a PDSCH in which paging is transmitted
System information RNTI (SI-RNTI): used to schedule a PDSCH in which system information is transmitted
Interruption RNTI (INT-RNTI): used to indicate whether a PDSCH is punctured
Transmit power control for PUSCH RNTI (TPC-PUSCH-RNTI): used to indicate a power control command regarding a PUSCH
Transmit power control for PUCCH RNTI (TPC-PUCCH-RNTI): used to indicate a power control command regarding a PUCCH
Transmit power control for SRS RNTI (TPC-SRS-RNTI): used to indicate a power control command regarding an SRS

The DCI formats enumerated above may follow the definitions given in Table 10 below, for example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM s ymbol(s) where UE may assume no transmission is inte nded for the UE |
| 2_2 | Transmission of TPC commands for PUCCH and PUSC H |
| 2_3 | Transmission of a group of TPC commands for SRS tr ansmissions by one or more UEs |

In 5G, the search space at aggregation level L in connection with CORESET p and search space set s may be expressed by Equation 1 below.

[Equation 1]

$$L \cdot \left\{ \left( Y_{p,n_{s,f}^{\mu}} + \left\lfloor \frac{m_{s,n_{CI}} \cdot N_{CCE,p}}{L \cdot M_{s,max}^{(L)}} \right\rfloor + n_{CI} \right) mod \left\lfloor \frac{N_{CCE,p}}{L} \right\rfloor \right\} + i$$

- $L$: aggregation level
- $n_{CI}$: carrier index
- $N_{CCE,p}$: total number of CCEs existing in control resource set $p$
- $n_{s,f}^{\mu}$ : slot index
- $M_{s,max}^{(L)}$ : number of PDCCH candidates at aggregation level L
- $m_{s,n_{CI}} = 0, \ldots, M_{s,max}^{(L)} - 1$ : PDCCH candidate index at aggregation level L
- $i = 0, ..., L -1$
- $Y_{p,n_{s,f}^{\mu}} = \left( A_p \cdot Y_{p,n_{s,f}^{\mu}-1} \right) mod D$ , $Y_{p,-1} = n_{RNTI} \neq 0, A_p = 39827 \ for \ p mod 3 = 0$ , $A_p = 39829 \ for \ p mod 3 = 1$, $A_p = 39839 \ for \ p mod 3 = 2$, $D = 65537$
- $n_{RNTI}$: UE identity

The $Y_{p,n_{s,f}^{\mu}}$ value may correspond to 0 in the case of a common search space.

The $Y_{p,n_{s,f}^{\mu}}$ value may correspond to a value changed by the UE's identity (C-RNTI or ID configured for the UE by the base station) and the time index in the case of a UE-specific search space.

In 5G, multiple search space sets may be configured by different parameters (for example, parameters in Table 9), and the group of search space sets monitored by the UE at each timepoint may differ accordingly. For example, if search space set #1 is configured at by X-slot cycle, if search space set #2 is configured at by Y-slot cycle, and if X and Y are different, the UE may monitor search space set #1 and search space set #2 both in a specific slot, and may monitor one of search space set #1 and search space set #2 both in another specific slot.

[PDSCH/PUSCH: regarding frequency resource allocation]

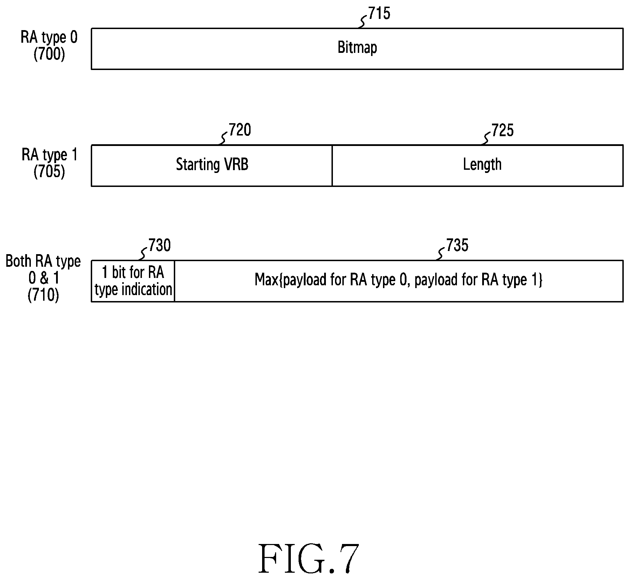

FIG. 7 illustrates an example of frequency domain resource allocation with regard to a physical downlink shared channel (PDSCH) or physical uplink shared channel (PUSCH) in a wireless communication system according to an embodiment of the disclosure.

FIG. 7 illustrates three frequency domain resource allocation methods of type-0 700, type-1 705, and dynamic switch 710 which can be configured through an upper layer in an NR wireless communication system.

Referring to FIG. 7, in the case in which a UE is configured to use only resource type 0 through upper layer signaling (700), partial downlink control information (DCI) for allocating a PDSCH to the UE include a bitmap including $N_{RBG}$ bits. As used herein, $N_{RBG}$ refers to the number of resource block groups (RBGs) determined according to the BWP size allocated by a BWP indicator and upper layer parameter rbg-Size, as in Table 11 below, and data is transmitted in RBGs indicated as "1" by the bitmap.

[Table 11]

| Bandwidth Part Size | Configuration 1 | Configuration 2 |
|---|---|---|
| 1 - 36 | 3 | 4 |
| 37 - 72 | 4 | 8 |
| 73 - 144 | 8 | 16 |
| 145 - 275 | 16 | 16 |

According to an embodiment, the BWP size refers to the number of RBs included in the BWP. For example, if resource allocation type-0 is indicated, the length of a frequency domain resource assignment (FDRA) field of DCI received by the UE may be equal to the number $N_{RBG}$ of RBGs, and may be $N_{RBG} = [(N_{BWP}^{size} + (N_{BWP}^{start} \bmod P)) / P]$. The first RBG may include $RBG_0^{size} = P - N_{BWP}^{size} \bmod P$ RBs, and the last RBG may include $RBG_{last}^{size} = (N_{BWP}^{start} + N_{BWP}^{size}) \bmod P$ RBs if $(N_{BWP}^{start} + N_{BWP}^{size}) \bmod P > 0$, and otherwise, may include $RBG_{last}^{size} = P \text{ RBs}$. The other RBGs may each include P RBs. Here, P may refer to the number of nominal RBGs as determined according to Table 11.

If the UE is configured to use only resource allocation type-1 through higher layer signaling (705), some DCI for allocating PDSCHs to the UE may include frequency domain resource allocation information including bits. $N_{RB}^{BWP}$ may denote the number of RBs included in a BWP. The base station may thereby configure a starting virtual resource block (starting VRB) 720 and the length 725 of a frequency domain resource allocated continuously therefrom.

In the case in which the UE is configured to use both resource allocation type-0 and resource allocation type-1 through upper layer signaling (710), partial DCI for allocating a PDSCH to the corresponding UE includes frequency domain resource allocation information including as many bits as the larger value 735 between the payload 715 for configuring resource allocation type-0 and the payload 720 and 725 for configuring resource allocation type-1. The conditions for this will be described again later. One bit may be added to the foremost part (MSB) of the frequency domain resource allocation information inside the DCI, and if the bit has the value of "0", use of resource allocation type- 0 may be indicated, and if the bit has the value of "1", use of resource allocation type-1 may be indicated.

[PDSCH/PUSCH: regarding time resource allocation]

Hereinafter, a time domain resource allocation method regarding a data channel in a next-generation mobile communication system (5G or NR system) will be described.

A base station may configure a table for time domain resource allocation information regarding a physical downlink shared channel (PDSCH) and a physical uplink shared channel (PUSCH) for a UE through upper layer signaling (for example, RRC signaling). A table including a maximum of maxNrofDL-Allocations=16 entries may be configured for the PDSCH, and a table including a maximum of maxNrofUL-Allocations=16 entries may be configured for the PUSCH. In an embodiment, the time domain resource allocation information may include PDCCH-to-PDSCH slot timing (for example, corresponding to a slot-unit time interval between a timepoint at which a PDCCH is received and a timepoint at which a PDSCH scheduled by the received PDCCH is transmitted; labeled K0), PDCCH-to-PUSCH slot timing (for example, corresponding to a slot-unit time interval between a timepoint at which a PDCCH is received and a timepoint at which a PUSCH scheduled by the received PDCCH is transmitted; hereinafter, labeled K2), information regarding the location and length of the start symbol by which a PDSCH or PUSCH is scheduled inside a slot, the mapping type of a PDSCH or PUSCH, and the like. For example, information such as in Table 12 or Table 13 below may be transmitted from the base station to the UE.

[Table 12]

| *PDSCH-TimeDomainResourceAllocationList information element* |
|---|
| PDSCH-TimeDomainResourceAllocationList ::= SEQUENCE (SIZE(1..maxNrofDL-Allocations)) OF PDSCH-TimeDomainResourceAllocation<br><br>PDSCH-TimeDomainResourceAllocation ::= SEQUENCE {<br>    k0                                          INTEGER(0..32) OPTIONAL,   -- Need S<br>        (PDCCH-to-PDSCH timing, slot unit)<br>    mappingType                                 ENUMERATED {typeA, typeB},<br>        (PDSCH mapping type)<br>    startSymbolAndLength                         INTEGER (0..127)<br>    (start symbol and length of PDSCH)<br>    } |

[Table 13]

| *PUSCH-TimeDomainResourceAllocationList information element* |
|---|
| PUSCH-TimeDomainResourceAllocationList ::= SEQUENCE (SIZE(1..maxNrofUL-Allocations)) OF PUSCH-TimeDomainResourceAllocation<br><br>PUSCH-TimeDomainResourceAllocation ::= SEQUENCE {<br>    k2                                          INTEGER(0..32) OPTIONAL,   -- Need S<br>        (PDCCH-to-PUSCH timing, slot unit)<br>    mappingType                                 ENUMERATED {typeA, typeB},<br>        (PUSCH mapping type)<br>    startSymbolAndLength                         INTEGER (0..127)<br>        (start symbol and length of PUSCH)<br>    } |

The base station may notify the UF of one of the entries of the table regarding time domain resource allocation information described above through L1 signaling (for example, DCI) (for example, "time domain resource allocation" field in DCI may indicate the same). The UE may acquire time domain resource allocation information regarding a PDSCH or PUSCH, based on the DCI acquired from the base station.

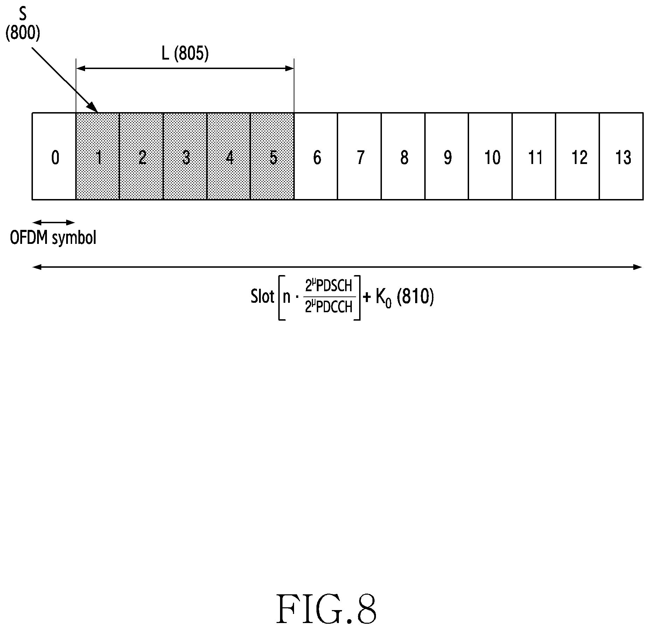

FIG. 8 illustrates an example of time domain resource allocation with regard to a PDSCH in a wireless communication system according to an embodiment of the disclosure.

Referring to FIG. 8, the base station may indicate the time domain location of a PDSCH resource according to the subcarrier spacing (SCS) ($\mu_{PDSCH}$, $\mu_{PDCCH}$) of a data channel and a control channel configured by using an upper layer, the scheduling offset (K0) value, and the OFDM symbol start location 800 and length 805 within one slot dynamically indicated through DCI.

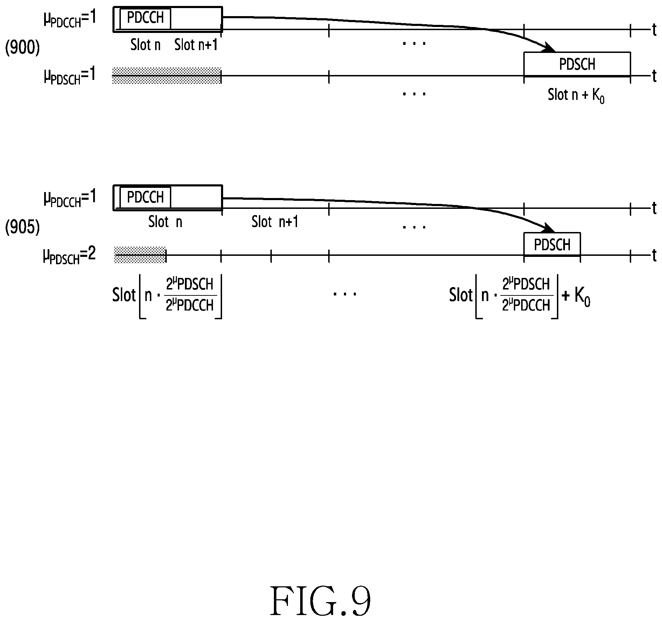

FIG. 9 illustrates an example of time domain resource allocation according to a subcarrier spacing with regard to a data channel and a control channel in a wireless communication system according to an embodiment of the disclosure.

Referring to FIG. 9, if the data channel and the control channel have the same subcarrier spacing (9-00, $\mu_{PDSCH} = \mu_{PDCCH}$), the slot number for data and that for control are identical, and the base station and the UE may accordingly generate a scheduling offset in conformity with a predetermined slot offset K0.

On the other hand, if the data channel and the control channel have different subcarrier spacings (9-05, $_{PDSCH} \neq$

$\mu_{PDCCH}$), the slot number for data and that for control are different, and the base station and the UE may accordingly generate a scheduling offset in conformity with a predetermined slot offset K0 with reference to the subcarrier spacing of the PDCCH.

[PUSCH: regarding transmission scheme]

A PUSCH transmission scheduling scheme will be described. PUSCH transmission may be dynamically scheduled by a UL grant inside DCI, or operated by means of configured grant Type 1 or Type 2. Dynamic scheduling indication regarding PUSCH transmission may be made by DCI format 0_0 or 0_1.

According to an embodiment, Configured grant Type 1 PUSCH transmission may be configured semi-statically by receiving configuredGrantConfig including rrc-ConfiguredUplinkGrant in Table 14 through upper signaling, without receiving a UL grant inside DCI. Configured grant Type 2 PUSCH transmission may be scheduled semi-persistently by a UL grant inside DCI after receiving configuredGrantConfig not including rrc-ConfiguredUplinkGrant in Table 14 through upper signaling. If PUSCH transmission is operated by a configured grant, parameters applied to the PUSCH transmission are applied through configuredGrantConfig (upper signaling) in Table 14 except for dataScramblingIdentityPUSCH, txConfig, codebookSubset, maxRank, and scaling of UCI-OnPUSCH, which are provided by pusch-Config (upper signaling) in Table 15. If provided with transformPrecoder inside configuredGrantConfig (upper signaling) in Table 14, the UE applies tp-pi2BPSK inside pusch-Config in Table 15 to PUSCH transmission operated by a configured grant.

[Table 14]

```
ConfiguredGrantConfig ::=                    SEQUENCE {
        frequencyHopping                              ENUMERATED {intraSlot, interSlot}
OPTIONAL,     -- Need S,
        cg-DMRS-Configuration           DMRS-UplinkConfig,
        mcs-Table                                     ENUMERATED {qam256, qam64LowSE}
OPTIONAL,     -- Need S
        mcs-TableTransformPrecoder                    ENUMERATED {qam256, qam64LowSE}
OPTIONAL,     -- Need S
        uci-OnPUSCH                                   SetupRelease { CG-UCI-OnPUSCH }
OPTIONAL,     -- Need M
        resourceAllocation                            ENUMERATED { resourceAllocationType0,
resourceAllocationType1, dynamicSwitch },
        rbg-Size                                      ENUMERATED {config2}
OPTIONAL,     -- Need S
        powerControlLoopToUse           ENUMERATED {n0, n1},
        p0-PUSCH-Alpha                  P0-PUSCH-AlphaSetId,
        transformPrecoder                             ENUMERATED {enabled, disabled}
OPTIONAL,     -- Need S
        nrofHARQ-Processes              INTEGER(1..16),
        repK                            ENUMERATED {n1, n2, n4, n8},
        repK-RV                                       ENUMERATED {s1-0231, s2-0303, s3-0000}
OPTIONAL,     -- Need R
        periodicity                     ENUMERATED {
                                                sym2,     sym7,     sym1x14,     sym2x14,
sym4x14, sym5x14, sym8x14, sym10x14, sym16x14, sym20x14,
                                                sym32x14,     sym40x14,     sym64x14,
sym80x14, sym128x14, sym160x14, sym256x14, sym320x14, sym512x14,
                                                sym640x14, sym1024x14, sym1280x14,
sym2560x14, sym5120x14,
                                                sym6,  sym1x12,  sym2x12,  sym4x12,
sym5x12, sym8x12, sym10x12, sym16x12, sym20x12, sym32x12,
                                                sym40x12,     sym64x12,     sym80x12,
sym128x12, sym160x12, sym256x12, sym320x12, sym512x12, sym640x12,
                                                sym1280x12, sym2560x12
        },
        configuredGrantTimer                                          INTEGER  (1..64)
OPTIONAL,     -- Need R
        rrc-ConfiguredUplinkGrant       SEQUENCE {
                timeDomainOffset                INTEGER (0..5119),
                timeDomainAllocation            INTEGER  (0..15),
                frequencyDomainAllocation       BIT STRING (SIZE(18)),
                antennaPort                     INTEGER (0..31),
                dmrs-SeqInitialization                                INTEGER  (0..1)
OPTIONAL,     -- Need R
                precodingAndNumberOfLayers      INTEGER (0..63),
```

```
        srs-ResourceIndicator                                    INTEGER   (0..15)
OPTIONAL,      -- Need R
        mcsAndTBS                                       INTEGER (0..31),
        frequencyHoppingOffset                                        INTEGER   (1..
maxNrofPhysicalResourceBlocks-1)                         OPTIONAL,      -- Need R
        pathlossReferenceIndex                              INTEGER   (0..maxNrofPUSCH-
PathlossReferenceRSs-1),
        ...

    }
OPTIONAL,      -- Need R
    ...

}
```

Hereinafter, a PUSCH transmission method will be described. The DMRS antenna port for PUSCH transmission may be substantially identical to an antenna port for SRS transmission. PUSCH transmission may follow a codebook-based transmission method and a non-codebook-based transmission method according to whether the value of txConfig inside pusch-Config in Table 15, which is upper signaling, is "codebook" or "nonCodebook".

According to an embodiment, PUSCH transmission may be dynamically scheduled through DCI format 0_0 or 0_1, and may be semi-statically configured by a configured grant. Upon receiving indication of scheduling regarding PUSCH transmission through DCI format 0_0, the UE may perform beam configuration for PUSCH transmission by using pucch-spatialRelationInfoID corresponding to a UE-specific PUCCH resource corresponding to the minimum ID inside an activated uplink BWP inside a serving cell, and the PUSCH transmission may be based on a single antenna port. The UE may not expect scheduling regarding PUSCH transmission through DCI format 0_0 inside a BWP having no configured PUCCH resource including pucch-spatialRelationInfo. If the UE has no configured txConfig inside pusch-Config in Table 17, the UE may not expect scheduling through DCI format 0_1.

[Table 15]

```
PUSCH-Config ::=                        SEQUENCE {
    dataScramblingIdentityPUSCH                                INTEGER   (0..1023)
OPTIONAL,      -- Need S
    txConfig                                ENUMERATED {codebook, nonCodebook}
OPTIONAL,      -- Need S
    dmrs-UplinkForPUSCH-MappingTypeA            SetupRelease { DMRS-UplinkConfig }
OPTIONAL,      -- Need M
    dmrs-UplinkForPUSCH-MappingTypeB            SetupRelease { DMRS-UplinkConfig }
OPTIONAL,      -- Need M
}
```

```
    pusch-PowerControl                                              PUSCH-PowerControl
OPTIONAL,     -- Need M
    frequencyHopping                                   ENUMERATED {intraSlot, interSlot}
OPTIONAL,     -- Need S
    frequencyHoppingOffsetLists                   SEQUENCE (SIZE (1..4)) OF INTEGER (1..
maxNrofPhysicalResourceBlocks-1)

OPTIONAL,     -- Need M
    resourceAllocation                             ENUMERATED { resourceAllocationType0,
resourceAllocationType1, dynamicSwitch},
    pusch-TimeDomainAllocationList                      SetupRelease  {  PUSCH-
TimeDomainResourceAllocationList }            OPTIONAL,    -- Need M
    pusch-AggregationFactor                        ENUMERATED  {  n2,  n4,  n8  }
OPTIONAL,      -- Need S
    mcs-Table                                        ENUMERATED {qam256, qam64LowSE}
OPTIONAL,      -- Need S
    mcs-TableTransformPrecoder                       ENUMERATED {qam256, qam64LowSE}
OPTIONAL,      -- Need S
    transformPrecoder                               ENUMERATED  {enabled,  disabled}
OPTIONAL,      -- Need S
    codebookSubset                                                          ENUMERATED
{fullyAndPartialAndNonCoherent, partialAndNonCoherent,nonCoherent}

OPTIONAL, -- Cond codebookBased
    maxRank                                                           INTEGER  (1..4)
OPTIONAL, -- Cond codebookBased
    rbg-Size                                         ENUMERATED  {  config2}
OPTIONAL, -- Need S
    uci-OnPUSCH                                     SetupRelease  {  UCI-OnPUSCH}
OPTIONAL, -- Need M
    tp-pi2BPSK                                          ENUMERATED  {enabled}
OPTIONAL, -- Need S
    ...
}
```

Next, codebook-based PUSCH transmission will be described. The codebook-based PUSCH transmission may be dynamically scheduled through DCI format 0_0 or 0_1, and may be semi-statically operated by a configured grant. If a codebook-based PUSCH is dynamically scheduled through DCI format 0_1 or configured semi-statically by a configured grant, the UE determines a precoder for PUSCH transmission, based on an SRS resource indicator (SRI), a transmission precoding matrix indicator (TPMI), and a transmission rank (the number of PUSCH transmission layers).

According to an embodiment, the SRI may be given through the SRS resource indicator (a field inside DCI) or configured through srs-ResourceIndicator (upper signaling). During codebook-based PUSCH transmission, the UE has at least one SRS resource configured therefor, and may have a maximum of two SRS resources configured therefor. In case that the UE is provided with the SRI through DCI, the SRS resource indicated by the corresponding SRI may refer to the SRS resource corresponding to the SRI, among SRS resources transmitted prior to the PDCCH including the corresponding SRI. In addition, the TPMI and the transmission rank may be given through "precoding information and number of layers" (a field inside DCI) or configured through precodingAndNumberOfLayers (upper signaling). The TPMI may be used to indicate a precoder to be applied to PUSCH transmission. If one SRS resource is configured for the UE, the TPMI may be used to indicate a precoder to be applied in the configured one SRS resource. If multiple SRS resources are configured for the UE, the TPMI is used to indicate a precoder to be applied in an SRS resource indicated through the SRI.

According to an embodiment, the precoder to be used for PUSCH transmission may be selected from an uplink codebook having the same number of antenna ports as the value of nrofSRS-Ports inside SRS-Config (upper signaling). In connection with codebook-based PUSCH transmission, the UE may determine a codebook subset, based on codebookSubset inside pusch-Config (upper signaling) and TPMI. The codebookSubset inside pusch-Config (upper signaling) may be configured to be one of "fullyAndPartialAndNonCoherent", "partialAndNonCoherent", or "noncoherent", based on UE capability reported by the UE to the base station. If the UE reported "partialAndNonCoherent'" as UE capability, the UE may not expect that the value of codebookSubset (upper signaling) will be configured as "fullyAndPartialAndNonCoherent". In addition, if the UE reported "nonCoherent" as UE capability, UE may not expect that the value of codebookSubset (upper signaling) will be configured as "fullyAndPartialAndNonCoherent" or "partialAndNonCoherent". If nrofSRS-Ports inside SRS-ResourceSet (upper signaling) indicates two SRS antenna ports, the UE does not expect that the value of codebookSubset (upper signaling) will be configured as "partialAndNonCoherent".

According to an embodiment, the UE may have one SRS resource set configured therefor, wherein the value of usage inside SRS-ResourceSet (upper signaling) is "codebook", and one SRS resource may be indicated through an SRI inside the corresponding SRS resource set. If multiple SRS resources are configured inside the SRS resource set wherein the value of usage inside SRS-ResourceSet (upper signaling) is "codebook", the UE expects that the value of nrofSRS-Ports inside SRS-Resource (upper signaling) is identical for all SRS resources.

According to an embodiment, the UE may transmit, to the base station, one or multiple SRS resources included in the SRS resource set wherein the value of usage is configured as "codebook" according to upper signaling. The base station may select one from the SRS resources transmitted by the UE and indicate the UE to be able to transmit a PUSCH by using transmission beam information of the corresponding SRS resource. In connection with the codebook-based PUSCH transmission, the SRI is used as information for selecting the index of one SRS resource, and is included in DCI. Additionally, the base station may add information indicating the rank and TPMI to be used by the UE for PUSCH transmission to the DCI. Using the SRS resource indicated by the SRI, the UE may apply, in performing PUSCH transmission, the precoder indicated by the rank and TPMI indicated based on the transmission beam of the corresponding SRS resource, thereby performing PUSCH transmission.

Next, non-codebook-based PUSCH transmission will be described. The non-codebook-based PUSCH transmission may be dynamically scheduled through DCI format 0_0 or 0_1, and may be semi-statically operated by a configured grant. If at least one SRS resource is configured inside an SRS resource set wherein the value of usage inside SRS-ResourceSet (upper signaling) is "nonCodebook", non-codebook-based PUSCH transmission may be scheduled for the UE through DCI format 0_1.

According to an embodiment, with regard to the SRS resource set wherein the value of usage inside SRS-ResourceSet (upper signaling) is "nonCodebook", one connected NZP CSI-RS resource (non-zero power CSI-RS) may be configured for the UE. The UE may calculate a precoder for SRS transmission by measuring the NZP CSI-RS resource connected to the SRS resource set. If the difference between the last received symbol of an aperiodic NZP CSI-RS resource connected to the SRS resource set and the first symbol of aperiodic SRS transmission in the UE is less than 42 symbols, the UE does not expect that information regarding the precoder for SRS transmission will be updated.

According to an embodiment, if the configured value of resourceType inside SRS-ResourceSet (upper signaling) is "aperiodic", the connected NZP CSI-RS may be indicated by an SRS request which is a field inside DCI format 0_1 or 1_1. If the connected NZP CSI-RS resource is an aperiodic NZP CSI-RS resource, the existence of the connected NZP CSI-RS may be indicated with regard to the case in which the value of SRS request (a field inside DCI format 0_1 or 1_1) is not "00". The corresponding DCI should not indicate cross carrier or cross BWP scheduling. In addition, if the value of SRS request indicates the existence of a NZP CSI-RS, the NZP CSI-RS may be located in the slot used to transmit the PDCCH including the SRS request field. TCI states configured for the scheduled subcarrier may not be configured as QCL-TypeD.

If there is a periodic or semi-persistent SRS resource set configured, the connected NZP CSI-RS may be indicated through associatedCSI-RS inside SRS-ResourceSet (upper signaling). With regard to non-codebook-based transmission, the UE may not expect that spatialRelationInfo which is upper signaling regarding the SRS resource and associatedCSI-RS inside SRS-ResourceSet (upper signaling) will be configured together.

According to an embodiment, in case that multiple SRS resources are configured for the UE, the UE may determine a precoder to be applied to PUSCH transmission and the transmission rank, based on an SRI indicated by the base station. The SRI may be indicated through the SRS resource indicator (a field inside DCI) or configured through srs-ResourceIndicator (upper signaling). Similarly to the above-described codebook-based PUSCH transmission, if the UE is provided with the SRI through DCI, the SRS resource indicated by the corresponding SRI refers to the SRS resource corresponding to the SRI, among SRS resources transmitted prior to the PDCCH including the corresponding SRI. The UE may use one or multiple SRS resources for SRS transmission. The UE may use one or multiple SRS resources for SRS transmission, and the maximum number of SRS resources that can be transmitted simultaneously in the same symbol inside one SRS resource set and the maximum number of SRS resources are determined by UE capability reported to the base station by the UE. SRS resources simultaneously transmitted by the UE may occupy the same RB. The UE may configure one SRS port for each SRS resource. There may be only one configured SRS resource set wherein the value of usage inside SRS-ResourceSet (upper signaling) is "nonCodebook", and a maximum of four SRS resources may be configured for non-codebook-based PUSCH transmission.

According to an embodiment, the base station may transmit one NZP-CSI-RS connected to the SRS resource set to the UE. The UE may calculate the precoder to be used when transmitting one or multiple SRS resources inside the corresponding SRS resource set, based on the result of measurement when the corresponding NZP-CSI-RS is received.

The UE may apply the calculated precoder when transmitting, to the base station, one or multiple SRS resources inside the SRS resource set wherein the usage is configured as "nonCodebook". The base station may select one or multiple SRS resources from the received one or multiple SRS resources. In connection with the non-codebook-based PUSCH transmission, the SRI may indicate an index that may express one SRS resource or a combination of multiple SRS resources. The number of SRS resources indicated by the SRI transmitted by the base station may be the number of transmission layers of the PUSCH, and the UE may transmit the PUSCH by applying the precoder applied to SRS resource transmission to each layer.

[Regarding CA/DC]

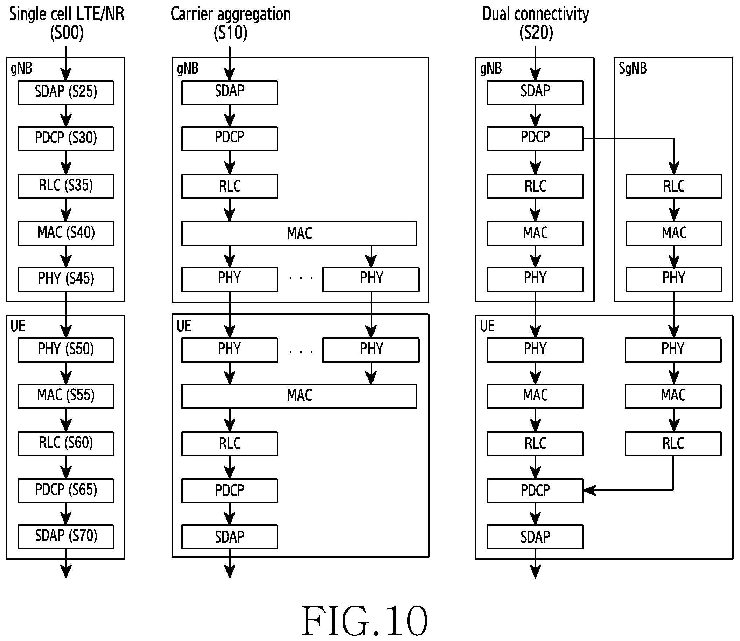

FIG. 10 illustrates radio protocol structures of a base station and a UE in single cell, carrier aggregation, and dual connectivity situations according to an embodiment of the disclosure.

Referring to FIG. 10, a radio protocol of a wireless communication system may be configured by an NR service data adaptation protocol (SDAP) S25 or S70, an NR packet data convergence protocol (PDCP) S30 or S65, an NR radio link control (RLC) S35 or S60, and an NR medium access controls (MAC) S40 or S55 on each of UE and NR base station sides. In the disclosure, the expression "be configured by" may be used interchangeably with the expression "include". For example, the radio protocol of the wireless communication system may include an NR SDAP S25 or S70, an NR PDCP S30 or S65, an NR RLC S35 or S60, and an NR MAC S40 or S55 on each of UE and NR base station sides.

According to an embodiment, the main functions of the NR SDAP S25 or S70 may include at least some of functions below.

- Transfer of user plane data
- Mapping between a QoS flow and a DRB for both DL and UL
- Marking QoS flow ID in both DL and UL packets
- Reflective QoS flow to DRB mapping for the UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating the QoS. The QoS information may be used as data processing priority, scheduling information, etc. for smoothly supporting services.

According to an embodiment, the main functions of the NR PDCP S30 or S65 may include at least some of functions below.

- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

According to an embodiment, the reordering of the NR PDCP device may refer to a function of reordering PDCP PDUs received from a lower layer in an order based on the PDCP sequence number (SN), and may include a function of transferring data to an upper layer in the reordered sequence. Alternatively, the reordering of the NR PDCP device may include a function of instantly transferring data without considering the order, may include a function of recording PDCP PDUs lost as a result of reordering, may include a function of reporting the state of the lost PDCP PDUs to the transmitting side, and may include a function of requesting retransmission of the lost PDCP PDUs.

According to an embodiment, the main functions of the NR RLC S35 or S60 may include at least some of functions below.

- Transfer of upper layer PDUs
- In-sequence delivery of upper layer PDUs

- Out-of-sequence delivery of upper layer PDUs
- Error Correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

According to an embodiment, the in-sequence delivery of the NR RLC device may refer to a function of successively delivering RLC SDUs received from the lower layer to the upper layer. The in-sequence delivery of the NR RLC device may include a function of reassembling and delivering multiple RLC SDUs received, into which one original RLC SDU has been segmented, may include a function of reordering the received RLC PDUs with reference to the RLC sequence number (SN) or PDCP sequence number (SN), may include a function of recording RLC PDUs lost as a result of reordering, may include a function of reporting the state of the lost RLC PDUs to the transmitting side, and may include a function of requesting retransmission of the lost RLC PDUs.

According to an embodiment, the in-sequence delivery of the NR RLC device may include a function of, if there is a lost RLC SDU, successively delivering only RLC SDUs before the lost RLC SDU to the upper layer, and may include a function of, if a predetermined timer has expired although there is a lost RLC SDU, successively delivering all RLC SDUs received before the timer was started to the upper layer. Alternatively, the in-sequence delivery of the NR RLC device may include a function of, if a predetermined timer has expired although there is a lost RLC SDU, successively delivering all currently received RLC SDUs to the upper layer. In addition, the in-sequence delivery of the NR RLC device may process RLC PDUs in the received order (regardless of the sequence number order, in the order of arrival) and deliver same to the PDCP device regardless of the order (out-of-sequence delivery). If receiving segments, the NR RLC device may receive segments stored in a buffer or to be received later, reconfigure the segments into one whole RLC PDU, process the RLC PDU, and then deliver the processed RLC PDU to the NR PDCP device. The NR RLC layer may include no concatenation function, which may be performed in the NR MAC layer or replaced with a multiplexing function of the NR MAC layer.

According to an embodiment, the out-of-sequence delivery of the NR RLC device may refer to a function of instantly delivering RLC SDUs received from the lower layer to the upper layer regardless of the order. The out-of-sequence delivery of the NR RLC device may include a function of reassembling and delivering multiple RLC SDUs received, into which one original RLC SDU has been segmented, and may include a function of storing the RLC SN or PDCP SN of received RLC PDUs, and recording RLC PDUs lost as a result of reordering.

According to an embodiment, the NR MAC S40 or S55 may be connected to multiple NR RLC layer devices configured in one UE, and the main functions of the NR MAC may include at least some of functions below.

- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

According to an embodiment, an NR PHY layer S45 or S50 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

According to an embodiment, the detailed structure of the radio protocol structure may be variously changed according to the carrier (or cell) operating scheme. For example, in case that the base station transmits data to the UE, based on a single carrier (or cell), the base station and the UE may use a protocol structure having a single structure with regard to each layer, such as S00. On the other hand, in case that the base station transmits data to the UE, based on carrier aggregation (CA) which uses multiple carriers in a single TRP, the base station and the UE may use a protocol structure which has a single structure up to the RLC, but multiplexes the PHY layer through a MAC layer, such as S10. As another example, in case that the base station transmits data to the UE, based on dual connectivity (DC) which uses multiple carriers in multiple TRPs, the base station and the UE may use a protocol structure which has a single structure up

28

to the RLC, but multiplexes the PHY layer through a MAC layer, such as S20.

According to an embodiment, referring to the above description relating to the PDCCH and beam configuration, PDCCH repetitive transmission is not supported in current Rel-15 and Rel-16 NR, and it may be thus difficult to achieve required reliability in a scenario requiring high reliability, such as URLLC. The disclosure may improve the PDCCH reception reliability of a UE by providing a PDCCH repetitive transmission method through multiple transmission points (TRPs). Specific methods thereof will be described hereinafter through the embodiments below.

Hereinafter, embodiments of the disclosure will be described in detail in conjunction with the accompanying drawings. The contents of the disclosure may be applied to FDD and TDD systems. As used herein, upper signaling (or upper layer signaling) is a method for transferring signals from a base station to a UE by using a downlink data channel of a physical layer, or from the UE to the base station by using an uplink data channel of the physical layer, and may also be referred to as "RRC signaling", "PDCP signaling", or "medium access control (MAC) control element (MAC CE)".

Hereinafter, in the disclosure, the UE may use various methods to determine whether or not to apply cooperative communication, for example, PDCCH(s) that allocates a PDSCH to which cooperative communication is applied have a specific format, or PDCCH(s) that allocates a PDSCH to which cooperative communication is applied include a specific indicator indicating whether or not to apply cooperative communication, or PDCCH(s) that allocates a PDSCH to which cooperative communication is applied are scrambled by a specific RNTI, or cooperative communication application is assumed in a specific range indicated by an upper layer. Hereinafter, it will be assumed, for convenience of description, that NC-JT case refers to a case in which the UE receives a PDSCH to which cooperative communication is applied, based on conditions similar to those described above.

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

Hereinafter, embodiments of the disclosure will be described in detail in conjunction with the accompanying drawings. In the following description, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing a communication function. In the following description of embodiments of the disclosure, a 5G system will be described by way of example, but the embodiments of the disclosure may also be applied to other communication systems having similar technical backgrounds or channel types. Examples of such communication systems may include LTE or LTE-A mobile communication systems and mobile communication technologies developed beyond 5G. Therefore, based on determinations by those skilled in the art, the embodiments of the disclosure may also be applied to other communication systems through some modifications without significantly departing from the scope of the disclosure. The contents of the disclosure may be applied to FDD and TDD systems.

In describing the disclosure below, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

In the following description of the disclosure, upper layer signaling may refer to signaling corresponding to at least one signaling among the following signaling, or a combination of one or more thereof.

- Master information block (MIB)
- System information block (SIB) or SIB X (X=1, 2, ...)
- Radio resource control (RRC)
- Medium access control (MAC) control element (CE)

In addition, L1 signaling may refer to signaling corresponding to at least one signaling method among signaling methods using the following physical layer channels or signaling, or a combination of one or more thereof.

- Physical downlink control channel (PDCCH)
- Downlink control information (DCI)
- UE-specific DCI
- Group common DCI
- Common DCI

Scheduling DCI (for example, DCI used for the purpose of scheduling downlink or uplink data)

- Non-scheduling DCI (for example, DCI not used for the purpose of scheduling downlink or uplink data)
- Physical uplink control channel (PUCCH)
- Uplink control information (UCI)

Hereinafter, determining priority between A and B may be variously described as, for example, selecting an entity having a higher priority according to a predetermined priority rule and performing an operation corresponding thereto, or omitting or dropping operations regarding an entity having a lower priority.

Hereinafter, the above examples may be described through multiple embodiments, but they are not independent of each other, and one or more embodiments may be applied simultaneously or in combination.

[Regarding SBFD]

Meanwhile, there has been ongoing discussion regarding subband non-overlapping full duplex (SBFD) as a new duplex scheme based on NR in 3GPP. The SBFD may be referred to as a technology wherein a part of a downlink resource is used as an uplink resource in a TDD spectrum of frequencies below 6GHz or frequencies above 6GHz such that uplink transmission is received from a UE as much as the increased uplink resource, thereby expanding the UE's uplink coverage, and feedback regarding downlink transmission is received from the UE in the expanded uplink resource, thereby reducing feedback delay. In the disclosure, a UE which may receive information regarding whether SBFD is supported from the base station and may perform uplink transmission in a part of the downlink resource may be referred to as an SBFD-capable UE for convenience of description. The following scheme may be considered to define the SBFD in specifications and for the SBFD-capable UE to determine that SBFD is supported in a specific cell (for frequency/frequency band).

The first scheme: in order to define SBFD in addition to the frame structure type of the existing unpaired spectrum (or time division duplex (TDD)) or paired spectrum (or frequency division duplex (FDD)), another frame structure type (for example, frame structure type 2 may be introduced). Frame structure type 2 may be defined to be supported at a specific frequency or in a specific frequency band, or the base station may indicate, to the UE, whether SBFD is supported by using system information. The SBFD-capable UE may receive system information indicating whether SBFD is supported and may thus determine whether SBFD is supported in a specific cell (or frequency/frequency band).

The second scheme may indicate whether SBFD is additionally supported at a specific frequency or in a specific frequency band of the existing unpaired spectrum (or TDD) without defining a new frame structure type. The second scheme may define whether SBFD is additionally supported at a specific frequency or in a specific frequency band of the existing unpaired spectrum, or the base station may indicate, to the UE, whether SBFD is supported by using system information. The SBFD-capable UE may receive system information indicating whether SBFD is supported and may thus determine whether SBFD is supported in a specific cell (or frequency/frequency band).

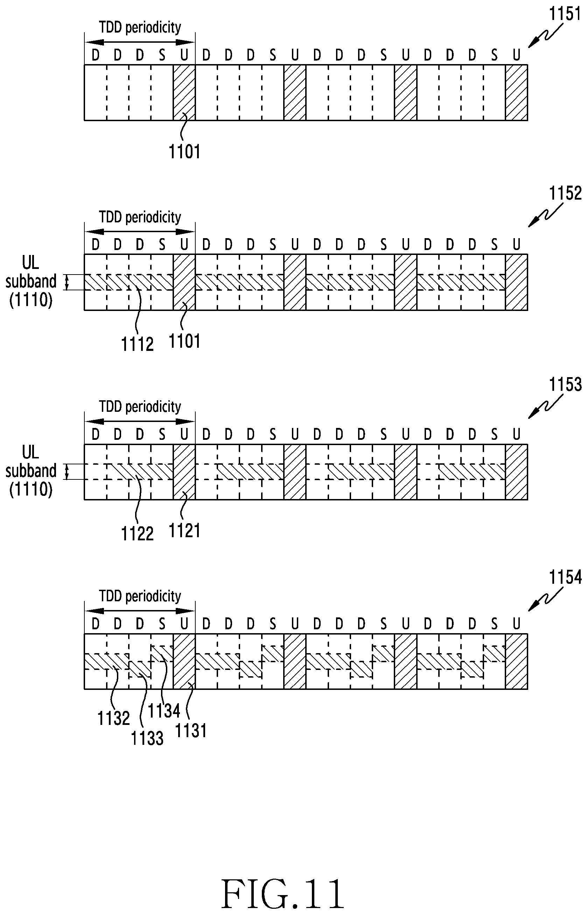

In the first and second schemes, the information regarding whether SBFD is supported may be information (for example, SBFD resource configuration information described later with reference to FIG. 11) indicating whether SBFD is supported indirectly by additionally configuring a part of a downlink resource as an uplink resource, in addition to the configuration regarding TDD uplink (UL) - downlink (DL) resource configuration information indicating the TDD's downlink slot (or symbol) resource and uplink slot (or symbol) resource. As another example, the information regarding whether SBFD is supported in the first and second schemes may directly indicate whether SBFD is supported.

In the disclosure, the SBFD-capable UE may receive a synchronization signal block during an initial cell access for accessing a cell (or base station), thereby acquiring cell synchronization. The process of acquiring cell synchronization may be identical for the SBFD-capable UE and the existing TDD UE. Thereafter, the SBFD-capable UE may determine whether the cell supports SBFD through an MIB acquisition or SIB acquisition or random access process.

According to an embodiment, system information for transmitting information regarding whether SBFD is supported may be distinguished from system information for a UE (for example, existing TDD UE) supporting a different version of specifications in the cell and then transmitted separately therefrom. The SBFD-capable UE may acquire all or part of the system information transmitted separately from the system information for the existing TDD UE, thereby determining whether SBFD is supported. In case that the SBFD-capable UE acquires only the system information for the existing TDD UE or acquires system information indicating that SBFD is not supported, the cell (or base station) may determine that the UE supports TDD only.

According to an embodiment, in case that information regarding whether SBFD is supported is included in system information for a UE (for example, existing TDD UE) supporting a different version of specifications, the information regarding whether SBFD is supported may be inserted in the last portion so as not to affect the existing TDD UE's system information acquisition. In case that the SBFD-capable UE fails to acquire the information regarding whether SBFD is supported, inserted in the last portion, or acquires information indicating that SBFD is not supported, the cell (or base station) may determine that the UE supports TDD only.

According to an embodiment, in case that information regarding whether SBFD is supported is included in system information for a UE (for example, existing TDD UE) supporting a different version of specifications, the information regarding whether SBFD is supported may be transmitted by using a separate PDSCH so as not to affect the existing TDD UE's system information acquisition. That is, a UE that does not support SBFD may receive a first SIB (or SIB1) including existing TDD-related system information through a first PDSCH. A UE that supports SBFD may receive a first SIB (or SIB1) including existing TDD-related system information through a first PDSCH, and may receive SBFD-related system information through a second PDSCH.

According to an embodiment, the first PDSCH and the second PDSCH may be scheduled by a first PDCCH and a second PDCCH, and the cyclic redundancy code (CRC) of the first PDCCH and the second PDCCH may be scrambled by the same RNTI (for example, SI-RNTI). The search space for monitoring the second PDCCH may be acquired from the first PDCCH's system information, and if the same fails to be acquired (that is, if the first PDCCH's system information includes no information regarding the search space), the second PDCCH may be received in the same search space as the search space of the first PDCCH.

In case that the SBFD-capable UE determines that the cell (or base station) supports only TDD, the SBFD-capable UE may perform a random access procedure and data/control signal transmission and/or reception in the same manner as the existing TDD UE.

The base station may configure a separate random access resource for each of existing TDD UEs or SBFD-capable UEs (for example, an SBFD-capable UE supporting duplex communication and an SBFD-capable UE supporting half-duplex communication). The base station may transmit configuration information regarding the random access resource (for example, configuration information or control information indicating a time-frequency resource that may be used for a PRACH) to an SBFD-capable UE through system information. The system information for transmitting information regarding the random access resource may be distinguished from system information for a UE (for example, existing TDD UE) supporting a different version of specifications in the cell and then transmitted separately therefrom.

According to an embodiment, the base station may configure a separate random access resource with regard to a TDD UE supporting a different version of specifications and an SBFD-capable UE, thereby distinguishing whether the TDD UE supporting a different version of specifications performs a random access or the SBFD-capable UE performs a random access. For example, a separate random access resource configured with regard to the SBFD-capable UE may be deemed to be a downlink time resource by the existing TDD UE. In case that the SBFD-capable UE performs a random access through an uplink resource (or separate random access resource) configured for some frequencies of downlink time resources, the base station may determine that the SBFD-capable UE has attempted a random access in the uplink resource.

As another example, the base station may not configure a separate random access resource for the SBFD-capable UE, and may configure a common random access resource for all UEs in the cell. In this case, configuration information regarding the random access resource may be transmitted to all UEs in the cell through system information, and upon receiving the system information, the SBFD-capable UE may perform a random access by using the random access resource. The SBFD-capable UE may then complete the random access procedure and may proceed to an RRC connected mode for transmitting/receiving data with the cell. After proceeding to the RRC connected mode, the SBFD-capable UE may receive an upper layer or physical signal, by which the same may determine that some frequency resources of downlink time resources are configured as uplink resources, from the base station, and may perform an SBFD operation, for example, transmit uplink signals in uplink resources.

According to an embodiment, in case that the SBFD-capable UE determines that the cell supports SBFD, the SBFD-capable UE may transmit capability information including at least one from among information regarding whether the UE supports SBFD, information regarding whether full-duplex communication or half-duplex communication is supported, the number of transmission and/or receptions antennas which the same has (or supports), and the like to the base station, thereby informing the base station that the SBFD-capable UE is attempting an access. As another example, in case that the SBFD-capable UE needs to implement half-duplex communication support, the capability information may not include information regarding whether half-duplex communication is supported. The SBFD-capable UE may report capability information to the base station through a random access process, may report the same to the base station after completing the random access process, or may report the same to the base station after completing proceeding to an RRC connected mode for transmitting/receiving data with the cell.

According to an embodiment, the SBFD-capable UE may support half-duplex communication such that uplink transmission or downlink reception is solely performed at one moment, similarly to the existing TDD UE, or may support full-duplex communication such that both uplink transmission and downlink reception are performed at one moment. Therefore, the SBFD-capable UE may report whether the half-duplex communication or full-duplex communication is supported to the base station through capability reporting. After the reporting, the base station may configure the SBFD-capable UE regarding whether the SBFD-capable UE is supposed to perform transmission/reception by using half-duplex communication or full-duplex communication. In case that the SBFD-capable UE reports capability regarding half-duplex communication to the base station, a switching gap may be necessary to change the RF between transmission and reception in case of operating in FDD or TDD, because no duplexer generally exists.

FIG. 11 illustrates an example in which SBFD is operated in a TDD spectrum of a wireless communication system to which the disclosure is applied.

FIG. 11 illustrates an example in which TDD is operated in a specific frequency band in connection with a TDD only configuration 1151 according to an embodiment. In a cell that operates TDD, a base station may transmit and/or receive a signal including data/control information with an existing TDD UE or with an SBFD-capable UE in a downlink slot (or symbol), uplink slot (or symbol) 1101, a flexible slot (or symbol), based on a configuration regarding TDD UL-DL resource configuration information indicating the TDD's downlink slot (or symbol) resource and uplink slot (or symbol) resource.

It may be assumed in FIG. 11 that a DDDSU slot format is configured according to the TDD UL-DL resource configuration information. For example, "D" may refer to a slot entirely configured by downlink symbols. "U" may refer to a slot entirely configured by uplink symbols. "S" may refer to a slot which is neither "D" nor "U", that is, a slot including downlink symbols or uplink symbols or including flexible symbols. It may be assumed in FIG. 11 of the disclosure that S is configured by 12 downlink symbols and 2 flexible symbols for convenience of description. In addition, the DDDSU slot format may be repeated according to the TDD UL-DL resource configuration information. That is, the repetition cycle of the TDD configuration may correspond to 5 slots (5ms in the case of 15kHz SCS, 2.5ms in the case of 30kHz SCS, or the like).

FIG. 11 illustrates an example in which SBFD is operated together with TDD in a specific frequency band in connection with SBFD configuration 1 1152, SBFD configuration 2 1153, or SBFD configuration 3 1154.

Referring to SBFD configuration 1 1152 in FIG. 11, the base station may configure some bands among the cell's frequencies as a frequency band 1110 in which uplink transmission is possible, for the UE. The frequency band in which uplink transmission is possible may be referred to as a UL subband. In addition, the UL subband may be applied to all symbols of all slots. The UE may transmit scheduled uplink channels or signals by using all symbols 1112 in the UL subband. However, the UE cannot transmit uplink channels or signals in bands other than the UL subband.

Referring to SBFD configuration 2 1153 in FIG. 11, some bands among the cell's frequencies may be configured for the UE as a frequency band 1120 in which uplink transmission is possible, and a time domain in which the frequency band is activated may be configured for the UE. The frequency band in which uplink transmission is possible may be referred to as a UL subband. According to SBFD configuration 2 1153 in FIG. 11, the UL subband is deactivated in the first slot, and the UL subband may be activated in remaining slots. Therefore, the UE may transmit uplink channels or signals in the UL subband 1122 of remaining slots. Therefore, the UL subband is activated with regard to each slot in FIG. 11, but this is only an example, the activation of the UL subband may be configured with regard to each symbol.

According to an embodiment, referring to SBFD configuration 3 1154 in FIG. 11, the base station may configure a time-frequency resource in which uplink transmission is possible, for the UE. One or more time-frequency resources may be configured for the UE as time-frequency resources in which uplink transmission is possible. For example, some frequency bands 1132 of the first slot and the second slot may be configured as time-frequency resources in which uplink transmission is possible. In addition, some frequency bands 1133 of the third slot and some frequency bands 1134 of the fourth slot may be configured as time-frequency resources in which uplink transmission is possible.

In the following description, a time-frequency resource in which uplink transmission is possible in a downlink symbol or slot may be referred to as an SBFD resource. In addition, a symbol having a UL subband configured therefor in a downlink symbol may be referred to as an SBFD symbol. In addition, a time-frequency resource in which downlink transmission is possible in an uplink symbol or slot may be referred to as an SBFD resource. In addition, a symbol having a DL subband configured therefor in an uplink symbol may be referred to as an SBFD symbol.

For convenience of description, in the disclosure, a band in which downlink channel or signal reception is possible, excluding a UL subband, may be referred to as a DL subband. A UE may configure a maximum of one UL subband in one symbol, and may configure a maximum of two DL subbands. For example, one of {UL subband, DL subband}, {DL subband, UL subband}, or {first DL subband, UL subband, second DL subband} may be configured for the UE in the frequency domain.

RB index

In the disclosure, one of the following three may be uses as the index of RBs in the frequency domain.

1) Common RB index

The common RB index, if starts from 0, may increase in proportion to the frequency. The UE may refer to the subcarrier matching with "point A" as subcarrier 0. In ascending order of frequency from the subcarrier, every 12 subcarriers may be grouped and given the common RB index. That is, in case that the subcarrier index is k, the value corresponding to floor(k/12) is the common RB index of the RB to which the subcarrier belongs.

The common RB index may be determined according to point A. Since point A is commonly configured for all UEs of the cell, all UEs may have the same common RB index.

2) BWP-specific RB index

A downlink BWP for receiving channels or signals or an uplink BWP for transmitting the same may be configured for the UE. The UE may assume that, as a BWP-specific RB index, the index of the lowest RB of a BWP is 0. For example, by using the BWP-specific RB index, the position of the starting RB of a BWP may be given as $N_{BWP}^{start}$ . That is, an RB corresponding to BWP-specific RB index $N_{BWP}^{start}$ may be given BWP-specific RB index 0. That is, $n_{CRB} = n_{PRB} + N_{BWP}^{start}$ . $n_{CRB}$ is the common RB index, and $n_{PRB}$ is the BWP-specific RB index.

3) Subband-specific RB index

The UE may have a UL subband configured for a downlink symbol. Conversely, a DL subband may be configured for an uplink symbol. It may be assumed in that, in connection with the subband-specific RB index, the index of the lowest RB among RBs included in a subband is 0.

For example, by using a common RB index, the position of the starting RB of a subband may be given as $N_{CRB-sub}^{start}$ . That is, the base station may configure the value of $N_{CRB-sub}^{start}$ for the UE through an upper layer signal. An RB corresponding to common RB index $N_{CRB-sub}^{start}$ may be given subband-specific RB index 0. That is, $n_{CRB} = n_{sub} + N_{CRB-sub}^{start}$ . $n_{CRB}$ may be the common RB index, and $n_{sub}$ may be the subband-specific RB index. For example, a subband having the starting RB's position configured by the value of $N_{CRB-sub}^{start}$ may be applied to all BWPs of the UE. That is, the same may not be BWP-specific.

As another example, by using the BWP-specific RB index, the position of the starting RB of a subband may be given or indicated as $N_{PRB-sub}^{start}$ . That is, the base station may configure the value of $N_{PRB-sub}^{start}$ for the UE through an upper layer signal. The value may be configured for a specific BWP. The RB corresponding to BWP-specific RB index $N_{PRB-sub}^{start}$ may be given subband-specific RB index 0. That is, $n_{PRB} = n_{sub} + N_{PRB-sub}^{start}$ . $n_{PRB}$ may be the BWP-specific RB index, and $n_{sub}$ may be the subband-specific RB index.

Through the above-described methods or examples, subband-specific RB index $n_{sub}$ may be expressed as follows:

$$n_{sub} = n_{CRB} - N_{CRB-sub}^{start} = n_{PRB} + (N_{BWP}^{start} - N_{CRB-sub}^{start})$$

$$n_{sub} = n_{PRB} - N_{PRB-sub}^{start} = n_{CRB} - (N_{BWP}^{start} + N_{PRB-sub}^{start})$$

Therefore, $N_{CRB-sub}^{start} = N_{BWP}^{start} + N_{PRB-sub}^{start}$ , $N_{PRB-sub}^{start} = N_{CRB-sub}^{start} - N_{BWP}^{start}$ .

<Embodiment 1> Determining PUSCH scheduling FDRA field in consideration of SBFD UL subband

It may be assumed that type-0 resource allocation scheme is configured for a UE. It may be assumed that the number of RBs included in the UE's UL BWP is $N_{RB}^{ULBWP}$ . It may also be assumed that the number of RBs included in a UL subband is $N_{RB}^{ULsub}$ , and the index of the starting RB of the UL subband is $N_{CRB-sub}^{start}$ . For convenience of description, it may be assumed in the disclosure that RBs included in a UL subband are all included in RBs that a UL BWP includes. However, in a specific configuration, not all RBs included in a UL subband may be included in RBs that a UL BWP includes. In this case, $N_{RB}^{ULsub}$ may be the number of RBs included in both the UL BWP and the UL subband. In addition, $N_{CRB-sub}^{start}$ may be the lowest index among RBs included in both the UL BWP and the subband. Therefore, $N_{CRB-sub}^{start}$ may be the larger value between $N_{CRB-sub}^{start}$ and $N_{BWP}^{start}$.

For reference, $N_{RB}^{ULsub}$ and $N_{CRB-sub}^{start}$ may differ depending on the time domain. This is because different UL subbands may be configured depending on the time domain. However, it may be assumed in the disclosure that one UL subband is configured. That is, $N_{RB}^{ULsub}$ and $N_{CRB-sub}^{start}$ are identical in the time domain. However, in the disclosure, in case that multiple UL subbands are configured in different time domains, $N_{RB}^{ULsub}$ and $N_{CRB-sub}^{start}$ may be as follows: in case that multiple, for example, two UL subbands (indexed as #1 and #2) are configured, $N_{RB}^{ULsub}$ may be the value of one of $N_{RB}^{ULsub\#1}$ and $N_{RB}^{ULsub\#2}$, and $N_{CRB-sub}^{start}$ may be the value of one of $N_{CRB-sub\#2}^{start}$ and $N_{CRB-sub\#2}^{start}$.

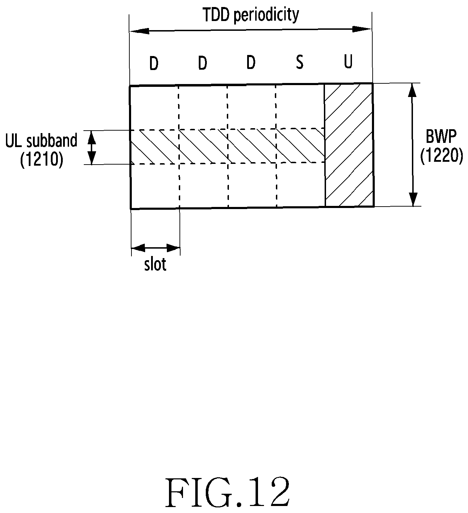

FIG. 12 is illustrated to describe an embodiment of the disclosure. FIG. 12 illustrates an example only, and this embodiment is substantially equally applicable to other embodiments. Referring to FIG. 12, an uplink symbol, a downlink symbol, or a flexible symbol may be configured for a UE according to a TDD configuration. For example, all symbols of slot "D" may be downlink symbols. All symbols of slot "U" may be uplink symbols. Slot "S" may be a slot that is neither slot "D" nor slot "U". A UL BWP 1220 may be configured for the UE. A UL subband 1210 may be configured in a DL symbol for the UE. It may be assumed in the disclosure that the UL BWP includes 275 RBs, and the UL subband includes 50 RBs.

According to 5GPP standard specifications, the number of RBGs according to type-0 resource allocation scheme may be determined by the UL BWP's size (that is, the number of RBs included in the UL BWP, $N_{RB}^{ULBWP}$). For example, referring to FIG. 11, if $N_{RB}^{ULBWP}$ is 275, the nominal RBG size (P) may be 16. That is, the UE may group a maximum of 16 RBs into one RGB. For example, the number of RBs may be $N_{RBG} = \left\lceil (N_{RB}^{ULBWP} + (N_{ULBWP}^{start} \bmod P))/P \right\rceil$. $N_{ULBWP}^{start}$ may be the index of the lowest RB of the UL BWP, and may start from common resource block 0. For reference, common resource block 0 may be an RB corresponding to point A. If $N_{RB}^{ULBWP} = 275$ and $N_{ULBWP}^{start} = 0$, then $N_{RBG} = \left\lceil (275 + (0 \bmod 16))/16 \right\rceil = 18$. Therefore, the FDRA field may need to include 18 bits. The $i^{th}$ bit (indexed in the order from the most significant bit to the least significant bit) may indicate whether the $i^{th}$ RGB has been scheduled.

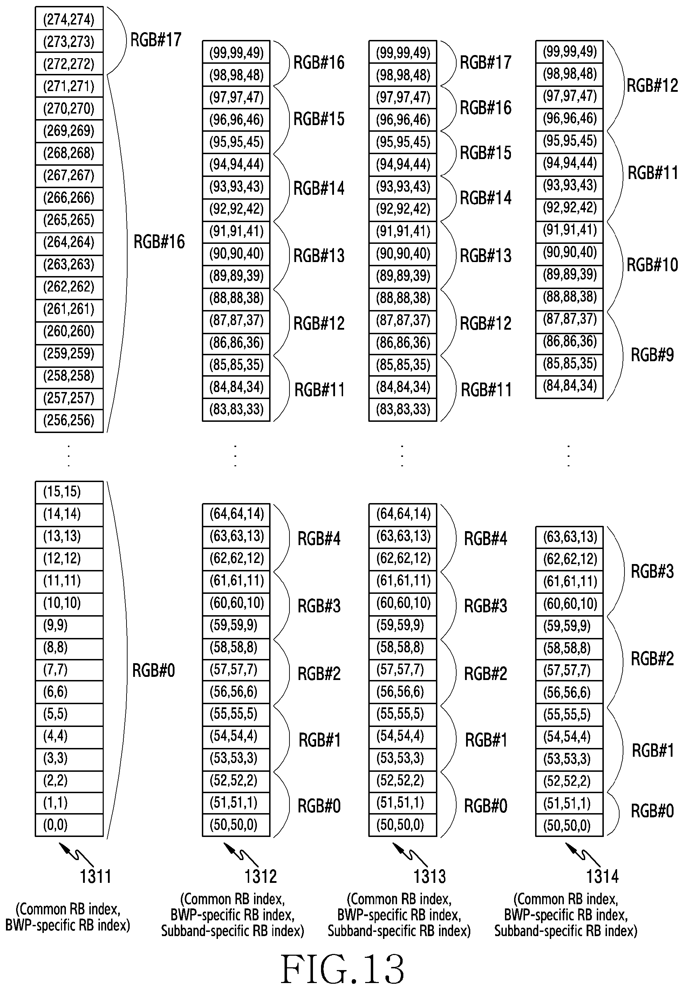

FIG. 13 illustrates an RBG configuration according to an embodiment of the disclosure.

According to an embodiment, the first RBG may include RBs, the number of which is $RBG_0^{size} = P - N_{RB}^{ULBWP} \bmod P$. The last RBG may include RBs, the number of which is $RBG_{last}^{size} = (N_{ULBWP}^{start} + N_{RB}^{ULBWP}) \bmod P$ if $(N_{ULBWP}^{start} + N_{RB}^{ULBWP}) \bmod P > 0$, and may otherwise include RBs, the number of which is $RBG_{last}^{size} = P$. Remaining RBGs may include $P$ RBs. For example, referring to FIG. 13, in the case of the first index 1311, if $N_{RB}^{ULBWP} = 275$ and $N_{ULBWP}^{start} = 0$, each of the first 17 RBGs (RBG#0, RBG#1, ..., RBG#16 of the first index 1311 in FIG. 13) may include 16 RBs, and the last RBG (RBG#17 of the first index 1311 in FIG. 13) may include 3 RBGs.

It may now be assumed that RBs of a UL subband are scheduled according to type-0 resource allocation scheme. In general, the UL subband may be smaller than or equal to the number of RBs of UL BWP. That is, $N_{RB}^{ULsub} \leq N_{RB}^{ULBWP}$. Therefore, if the UL subband (or the number of RBs of the UL subband) is smaller than the number of RBs of UL BWP, RBs included in some RBGs of the UL BWP may not be included in the UL subband. That is, although the DCI format received by the UE includes an FDRA field having $N_{RBG}$ bits, some bits among the same may not indicate scheduling information always. That is, some bits are included in the DCI format but are not used. Therefore, the DCI format includes unnecessary bits.

Methods for solving the case in which some bits of the DCI format are not used, or unnecessary bits are included in the DCI format, are disclosed.

Method 1: determines and indicates the UL subband's RBG based on the number of bits of the FDRA field

According to an embodiment, in the first method, the UE may determine the number of bits of the FDRA field according to the number of RBGs generated based on the UL BWP, and may group RBs of the UL subband into an RBG, based on the number of bits of the FDRA field. For convenience of description, the RBG generated based on the UL BWP may be referred to as the first RBG, and the RBG into which RBs of the UL subband are grouped may be referred to as the second RBG.

In the disclosure, the second RBG may be determined as follows. The number of bits of the FDRA field determined according to the number of first RBGs may be referred to as $B_{FDRA}$. It may be assumed that the UL subband is configured by RBs, the number of which is $N_{RB}^{ULsub}$. The UE may cluster $N_{RB}^{ULsub}$ RBs into as many groups as $B_{FDRA}$. Therefore, the UE may cluster the same such that the number of second RBGs is $B_{FDRA}$.

For example, the clustering method (or grouping method) may be at least one of the following:

According to an embodiment, in the <u>first grouping method</u>, the UE may determine $Q = \text{ceil}(N_{RB}^{ULsub} / B_{FDRA})$ as the nominal RBG size (Q) for the second RBG. That is, the UE may group, based on the nominal RBG size, $B_{FDRA}$ second RBGs each including $N_{RB}^{ULsub}$ RBs, as follows:

Among the second RBGs, as many first RBGs as $\text{floor}(N_{RB}^{ULsub}/Q)$ may each include as many RBs as Q. That is, the index of RBs included in the first RBG may be {0,1,...,Q-1}, the index of RBs included in the second RBG may be {Q,Q+1,...,2*Q-1}, ... , and the index of RBs included in the $(\text{floor}(N_{RB}^{ULsub}/Q))^{th}$ RBG may be $\{(\text{floor}(N_{RB}^{ULsub}/Q)-1)*Q,\ldots,\text{floor}(N_{RB}^{ULsub}/Q)*Q-1\}$. In addition, the index of RBs included in the $(\text{floor}(N_{RB}^{ULsub}/Q) + 1)^{th} \text{ RBG}$ RGB may be $\{\text{floor}(N_{RB}^{ULsub}/Q)*Q,\text{floor}(N_{RB}^{ULsub}/Q)*Q+1,\ldots, N_{RB}^{ULsub}-1\}$. For reference, the index may be the subband-specific RB index.

For example, with reference to the second index 1312 in FIG. 13, it may be assumed that $B_{FDRA}$=18 and $N_{RB}^{ULsub}$=50. According to the subband-specific RB index, it may be necessary to group 50 RBs, the index of which is 0, 1, 2, ..., 49, into 18 second RBGs. The nominal RBG size for second RBGs may be Q = ceil(50/18)=3. Among second RBGs, the first $\text{floor}(N_{RB}^{ULsub}/Q) = 16$ RBGs (RBG#0, RBG#1, ..., RBG#15 of the second index 1312 in FIG. 13) may each include 3 RBs. In addition, among second RBGs, the $(\text{floor}(N_{RB}^{ULsub}/Q) + 1 = 17)^{th}$ RBG (RBG#16 of the second index 1312 in FIG. 13) may include 2 RBs.

According to an embodiment, the $i^{th}$ bits of the FDRA field may indicate whether the $i^{th}$ second RGB is scheduled or not.

According to an embodiment, the UE may obtain as many valid second RBGs as $\text{ceil}(N_{RB}^{ULsub}/Q)$ bits. Being valid may substantially indicate an RBG including at least one RB. In other words, an invalid RBG may include no RB. That is, the UE may still not use some bits included in the DCI. Referring to the second index 1312 in FIG. 13, $B_{FDRA}$=18, but the 18th RBG may include no RB. Therefore, one bit of the FDRA field may not indicate whether scheduling is made or not.

According to an embodiment, in the <u>second grouping method,</u> the UE may cluster as many RBs as $N_{RB}^{ULsub}$ into $B_{FDRA}$ groups as follows:

As many second RBGs as $M1 = N_{RB}^{ULsub} \text{ mod } B_{FDRA}$ may each include as many RBs as $K1 = \text{ceil}(N_{RB}^{ULsub}/B_{FDRA})$.

As many second RBGs as $M2 = B_{FDRA} - (N_{RB}^{ULsub} \text{ mod } B_{FDRA})$ may each include as many RBs as $K2 = \text{floor}(N_{RB}^{ULsub}/B_{FDRA})$.

As an example, if $i$=1,...,M1, the $i^{th}$ second RBG may include RBs, the subband-specific RB index of which is {(i-1)*K1, (i-1)*K1+1,..., i*K1-1}. If $i$=M1+1,..., $B_{FDRA}$, the $i^{th}$ second RBG may include RBs, the subband-specific RB index of which is {M1*K1+(i-M1-1)*K2, M1*K1+(i-M1-1)*K2+1,..., M1*K1+(i-M1)*K2-1}.

According to an embodiment, the $i^{th}$ bit of the FDRA field may indicate whether the second RBG is scheduled or not.

For example, referring to the third index 1313 in FIG. 13, it may be assumed that $B_{FDRA}$=18 and $N_{RB}^{ULsub}=50$.

As many second RBGs as $M1 = N_{RB}^{ULsub} \bmod B_{FDRA} = 50 \bmod 18 = 14$ may each include as many RBs as $K1 = \text{ceil}(N_{RB}^{ULsub}/B_{FDRA}) = 3$.

As many second RBGs as $M2 = B_{FDRA} - (N_{RB}^{ULsub} \bmod B_{FDRA}) = 4$ may each include as many RBs as $K2 = \text{floor}(N_{RB}^{ULsub}/B_{FDRA}) = 2$.

That is, if $i$=1,...,14, the $i^{th}$ second RBG (RBG#0, RBG#1, ..., RBG#13 in the third index 1313 in FIG. 13) may include RBs, the subband-specific RB index of which is {(i-1)*3, (i-1)*3+1,..., i*3-1}. If $i$=15,..., 18, the $i^{th}$ second RBG (RBG#14, RBG#15, ..., RBG#17 in the third index 1313 in FIG. 13) may include RBs, the subband-specific RB index of which is {42+(i-15)*2, 42+(i-15)*2+1,..., 42+(i-14)*2-1}.

Through the above-described grouping method, if the number of RBs of the UL subband is equal to or larger than the number ($B_{FDRA}$) of bits of the FDRA, $B_{FDRA}$ second RBGs may all be valid.

In the disclosure, *ceil (x)* may indicate the smallest integer among numbers larger than or equal to *x,* and *floor (x)* may indicate the largest integer among numbers smaller than or equal to *x.*

Method 2: determines and indicates RBGs, based on the number of bits of the FDRA field and the frequency position of the UL subband

The number of RBs included in the second RBG obtained in the previous method, or the nominal RBG size, may not be a power of two. In this case, the RBG boundary may not match between different UEs. The second method may be directed to solve the case in which the RBG boundary do not match between different UEs.

According to an embodiment, in the second method, the UE may select one of powers of two as the nominal RBG value of the second RBG. One value may be selected from powers of two: 1, 2, 4, 8, and 16. When selecting the nominal RBG value of the second RBG, the number of bits of the FDRA field or the frequency position of the UL subband may be considered.

For example, when second RBGs are made from RBs of the UL subband by using the nominal RBG value of the second RBG, the number of second RBGs may need to be smaller than or equal to the number of bits of the FDRA field. Therefore, the number of bits of the FDRA field may be the smallest number satisfying the condition that the number of second RBGs, based on the nominal RBG value, is smaller than or equal to the number of bits of the FDRA field. That is, the UE may determine that, among X=1, 2, 4, 8, 16, the smallest X value satisfying

$$\text{ceil}\left(\frac{N_{RB}^{ULsub}+(N_{CRB-sub}^{start} \bmod X)}{X}\right) \leq B_{FDRA}$$

is the nominal RBG value of the second RBG.

For reference, an RB corresponding to common RB index $N_{CRB-sub}^{start}$ may be given subband-specific RB index 0. $N_{CRB-sub}^{start}$ may be $N_{CRB-sub}^{start} = N_{BWP}^{start} + N_{PRB-sub}^{start}$.

For example, it may be assumed that $N_{RB}^{ULsub} = 50, N_{CRB-sub}^{start} = 50$. $B_{FDRA}$=18. If X=1, $\text{ceil}\left(\frac{N_{RB}^{ULsub}+(N_{CRB-sub}^{start} \bmod X)}{X}\right) = N_{RB}^{ULsub} = 50$. If X=2, $\text{ceil}\left(\frac{N_{RB}^{ULsub}+(N_{CRB-sub}^{start} \bmod X)}{X}\right) = 25$; if X=4, $\text{ceil}\left(\frac{N_{RB}^{ULsub}+(N_{CRB-sub}^{start} \bmod X)}{X}\right) = 13$; if X=8, $\text{ceil}\left(\frac{N_{RB}^{ULsub}+(N_{CRB-sub}^{start} \bmod X)}{X}\right) = 7$; and if X=16, $\text{ceil}\left(\frac{N_{RB}^{ULsub}+(N_{CRB-sub}^{start} \bmod X)}{X}\right) = 4$. Therefore, in the case of X=4, 8, 16, second RBGs, the number of which is smaller than $B_{FDRA}$, may be obtained. Therefore, the smallest value among the X values may be determined to be X=4.

In case that X is determined by the nominal RBG value of the second RBG, RBs of the UL subband may be grouped into the second RBG, based on X. The index of RBs of the UL is the subband-specific RB index.

According to an embodiment, the first second RBG may include as many RBs as

$$\text{RBG}_0^{\text{size}} = X - N_{RB}^{\text{ULsub}} \bmod X$$ . The last second RBG may include as many RBs as $$\text{RBG}_{last}^{\text{size}} = \left(N_{CRB-sub}^{start} + N_{RB}^{\text{ULsub}}\right) \bmod X$$ if $\left(N_{CRB-sub}^{start} + N_{RB}^{\text{ULsub}}\right) \bmod X > 0$ , and last second RBG may otherwise include as many RBs as $$\text{RBG}_{last}^{\text{size}} = X$$ . Remaining second RBGs may include X RBs.

For example, referring to the fourth index 1314 in FIG. 13, if $N_{RB}^{\text{ULsub}} = 50$ , $N_{CRB-sub}^{start} = 50$ , and X=4, the first second RBG (RBG#0 in the fourth index 1314 in FIG. 13) may include 2 RBs, and remaining 12 second RBGs (RBG#1, RBG#2, ..., RBG#12 in the fourth index 1314 in FIG. 13) may each include 4 RBs.

The UE may obtain as many valid second RBGs as $$\left\lceil \left(N_{RB}^{\text{ULsub}} + \left(N_{CRB-sub}^{start} \bmod X\right)\right) / X \right\rceil$$ bits. Being valid may indicate an RBG including at least one RB. In other words, an invalid RBG may include no RB. That is, the UE may still not use some bits included in the DCI. Referring to the fourth index 1314 in FIG. 13, $B_{FDRA}$=18, but some RBGs (RBG#13, RBG#14, ... RBG#17) may include no RB. Therefore, one bit of the FDRA field may not indicate whether scheduling is made or not.

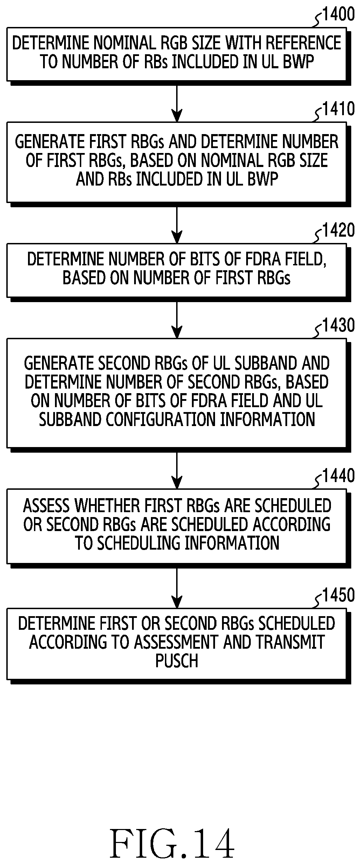

FIG. 14 is a flowchart of a UE's PUSCH transmission method according to the disclosure.

Referring to FIG. 14, according to an embodiment, steps performed by a UE are described.

According to an embodiment, in step 1400, the UE may have a UL BWP configured by the base station through an upper layer signal. For example, the configuration of the UL BWP may include the subcarrier spacing of the UL BWP, the index of the lowest RB of the UL BWP from "point A" (for example, index based on common RB index), and the number of RBs included in the UL BWP. The UE may obtain, identify, or determine the nominal RBG size, based on the configured number of RBs of the UL BWP.

According to an embodiment, in step 1410, the UE may determine the number of RBGs and produce RBGs, based on the nominal RBG size obtained in step 1400. The RBGs may be referred to as first RBGs. For example, the UE may generate first RBGs and determine the number of first RBGs, based on the nominal RBG size and the RBs included in the UL BWP.

According to an embodiment, in step 1420, the UE may determine the number of FDRA fields which may indicate whether the first RBGs obtained in step 1410 are scheduled or not, by using a bitmap. The number of FDRA fields may be identical to the number of first RBGs. For example, the UE may determine the number of bits of the FDRA fields, based on the number of first RBGs.

According to an embodiment, in step 1430, the UE may generate second RBGs of the UL subband and determine (or identify) the number of second RBGs, based on the number of bits of the FDRA fields and UL subband configuration information. Generation of second RBGs of the UL subband, and the number of second RBGs may be determined through the above-described first method and/or second method. The UL subband configuration information may include at least one of the index of the lowest RB of the UL subband from "point A" (index based on common RB index), and the number of RBs included in the UL subband.

According to an embodiment, in step 1440, the UE may determine, according to PUSCH scheduling information received from the base station, whether the bitmap of FDRA fields indicates that first RBGs determined in step 1400 are scheduled or second RBGs determined in step 1430 are scheduled. For example, the PUSCH scheduling information may include time domain resource assignment of the PUSCH. For example, the UE may assess or determine whether first RBGs are scheduled or second RBGs are scheduled according to scheduling information.

According to an embodiment, in step 1450, the UE may interpret FDRA fields according to the assessment in step 1440, and may transmit a PUSCH by using RBGs scheduled in the FDRA fields. For example, the UE may determine first or second RBGs scheduled according to the assessment, and may transmit a PUSCH.

<u><Method for selecting first RBGs or second RBGs according to scheduling information></u>

The first and second RBGs in method 1 or method 2 described above may be applied if the following condition is satisfied. That is, whether the first and second RBGs satisfy the condition may be determined through a process of determining which RBGs, among first RBGs and second RBGs, are scheduled by the bitmap of FDRA fields according to PUSCH scheduling information in step 1440 in FIG. 14.

According to an embodiment, the UE may receive a DCI format that schedules a PUCCH. The UE may receive a time domain resource assignment (TDRA) field that indicates a slot or symbol by which a PUSCH is scheduled, from the DCI format. In case that all slots or symbols by which a PUSCH is scheduled according to the TDRA overlap UL symbols (symbols in which all RBs of the UL BWP are used for UL transmission), the UE may interpret the FDRA field by using first RBGs. The first RBGs may be RBGs determined based on the UL BWP.

In case that all symbols by which a PUSCH is scheduled according to TDRA overlap SBFD symbols, the UE may interpret the FDRA field by using second RBGs. The second RBGs may be RBGs determined based on the UL subband. The SBFD symbols may be configured such that RBs included in the UL subband, among the UL BWP, are used for UL transmission, but RBs not included in the UL subband are not used for UL transmission.

In case that a symbol by which a PUSCH is scheduled according to TDRA simultaneously overlaps a UL symbol and an SBFD symbol, the UE may interpret the FDRA field by selecting one of a first RBG and a second RBG. For example, the UE may interpret the FDRA field always based on the second RBG. This may be because the PUSCH is scheduled by the same RB, the UE thus has the PUSCH scheduled for the SBFD symbol, and at least one RB is included in the UL subband. That is, even in the UL symbol, the UE may have a PUSCH scheduled only in the same frequency band as the UL subband.

As another example, the UE interpret the FDRA field always based on the first RBG. The reason the FDRA field is interpreted based on the first RBG is because use of the first RBG makes it easy to match the RBG with other UEs in the UL symbol.

As another example, the base station may configure one of a first RBG and a second RBG for the UE through an upper layer signal. That is, the base station may cause the UE to use one of a first RBG and a second RBG in a predetermined manner.

As another example, the base station may indicate one of a first RBG and a second RBG to the UE in a DCI format that schedules a PUSCH. That is, the DCI format may include one bit. If the one bit indicates a first value (for example, "0"), the first RBG may be used, and if the one bit indicates a different second value (for example, "1"), the second RBG may be used.

According to an embodiment, the UE may receive a DCI format that schedules multiple PUSCHs. In connection with multiple PUSCHs, the same transport block (TB) may be repeated, and different TBS may be transmitted through the multiple PUSCHs. The DCI format may include one FDRA field such that the FDRA field is applied to multiple PUSCHs. In order to assess FDRA information of multiple PUSCHs, the UE may need to determine an RBG for interpreting the FDRA field.

In a method of the disclosure, the UE may determine an RBG, based on scheduling information of a PUSCH that comes first in the time domain, among multiple PUSCHs. That is, the UE may determine the RBG to be used by the PUSCH that comes first, based on whether the PUSCH that comes first in the time domain, among multiple PUSCHs is scheduled for a UL symbol or an SBFD symbol. Previously disclosed examples may be used. The determined RBG may be applied to other PUSCHs. That is, if the determined RBG is a first RBG, FDRA may be interpreted based on the first RBG even in following PUSCHs. If the determined RBG is a second RBG, FDRA may be interpreted based on the second RBG even in following PUSCHs.

As another example, in case that at least one of multiple PUSCHs overlaps an SBFD symbol, the UE may interpret FDRA, based on the second RBG with regard to all of the multiple PUSCHs. In case that multiple PUSCHs all overlap a UL symbol, FDRA may be interpreted based on the first RBG.

As another example, in case that at least one of multiple PUSCHs overlaps a UL symbol, the UE may interpret FDRA, based on the first RBG with regard to all of the multiple PUSCHs. In case that multiple PUSCHs all overlap an SBFD symbol, FDRA may be interpreted based on the second RBG.

As another example, in case that at least one of multiple PUSCHs all overlaps a UL symbol, the UE may interpret FDRA, based on the first RBG with regard to all of the multiple PUSCHs. In case that each of multiple PUSCHs overlaps at least one SBFD symbol, FDRA may be interpreted based on the second RBG.

<Embodiment 2> determining FDRA field based on separate FDRA configuration value of UL subband

In the first or second method of embodiment 1 described above, the UE has determined the number of first RBGs, based on the UL BWP, and it is assumed that the same number of bits as the number of first RBGs are included in the FDRA field. Therefore, method 1 or 2 has been disclosed as a method for using bits of the FDRA field to the maximum. Embodiment 2 discloses a method for determining the number of bits of the FDRA field, based on the number of first RBGs determined based on the UL BWP and the number of second RBGs determined based on the UL subband.

For example, the UE may determine the number of first RBGs, based on the UL BWP. The number of first RBGs may be determined as $N_{RBG,1} = \left\lceil (N_{RB}^{ULBWP} + (N_{ULBWP}^{start} \bmod P))/P \right\rceil$ wherein $P$ refers to the nominal RBG size of first RBGs, and may be obtained through Table 11.

According to an embodiment, the UE may determine the number of second RBGs, based on the UL subband. The number of second RBGs may be determined as $N_{RBG,2} = \left\lceil (N_{RB}^{ULsub} + (N_{CRB-sub}^{start} \bmod Q))/Q \right\rceil$. $Q$ refers to the nominal RBG size of second RBGs. The base station may configure the nominal RBG size of second RBGs for the UE through an upper layer signal. In another method, the nominal RBG size of second RBGs may be configured for the UE through Table 16 below. Configuration 1 or configuration 2 may be determined according to an upper layer signal. The upper layer signal may be identical to the upper layer signal for determining the nominal RBG size of second RBGs. In Table 16, the UL subband size may be $N_{RB}^{ULsub}$.

[Table 16]

| UL subband size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

According to an embodiment, the UE may determine the number of bits of the FDRA field, based on the larger value between the number of first RBGs ($N_{RBG,1}$) and the number of second RBGs ($N_{RBG,2}$). For example, if $N_{RBG,1} \geq N_{RBG,2}$, the number of bits of the FDRA field may be $N_{RBG,1}$. On the other hand, if $N_{RBG,1} < N_{RBG,2}$, the number of bits of the FDRA field may be $N_{RBG,2}$. The UE may monitor the DCI format including the number of bits of the FDRA field.

As another example, when the base station configures the nominal RBG size of second RBGs for the UE through an upper layer signal, the UE may expect that the number of second RBGs will not exceed the number of first RBGs. In other words, when the base station configures the nominal RBG size of second RBGs for the UE through an upper layer signal, the base station may configure only values such that the number of second RBGs do not exceed the number of first RBGs.

The second embodiment relates to a case in which one UL subband is configured for the UE. If multiple (two or more) UL subbands are configured for the UE, the UE may determine the number of bits of the FDRA field, based on the number of RBGs of the multiple UL subbands.

The second embodiment may be generalized as follows:
According to an embodiment, the base station may configure, for the UE, a resource allocation type for transmitting a PUSCH in the UL BWP through an upper layer signal (for example, radio resource control (RRC) signaling). For example, the resource allocation type may be one of type-0 resource allocation (bitmap-based) or type-1 resource allocation (RIV-based) or dynamic switching of or type-0 resource allocation and type-1 resource allocation. The UE may determine the length of a first FDRA field for transmitting a PUSCH, based on the number of RBs included in the UL BWP.

According to an embodiment, the base station may configure, for the UE, a resource allocation type for transmitting a PUSCH in the UL subband through an upper layer signal. For example, the resource allocation type may be one of type-0 resource allocation (bitmap-based) or type-1 resource allocation (RIV-based) or dynamic switching of or type-0 resource allocation and type-1 resource allocation. The UE may determine the length of a second FDRA field for transmitting a PUSCH, based on the number of RBs included in the UL subband.

The UE may determine the length of the FDRA field to be included in the DCI format, based on the larger value between the first FDRA field length and the second FDRA field length. That is, if the first FDRA field length is larger than the second FDRA field length, "0" may be padded to the second FDRA field length such that the same becomes identical to the first FDRA field length. In this regard, "0" may be padded to the MSB or LSB.

It has previously been described that a resource allocation type for transmitting a PUSCH in the UL subband may be configured. However, SBFD symbols or resources may be used for coverage expansion or the like. Therefore, the UE may assume type-1 resource allocation (RIV-based) always in the UL subband.

<Embodiment 3-1> designing FDRA using schedulable UL RB in UL BWP

According to an embodiment, the UE may be unable to use all RBs of the UL BWP for the uplink in all symbols according to specific UL subband and DL subband configurations. In this case, an RBG determined based on the UL BWP may solely include RBs that cannot be scheduled. In this case, the FDRA field may include unnecessary bits. A method for solving the case in which the FDRA field includes unnecessary bits will be disclosed.

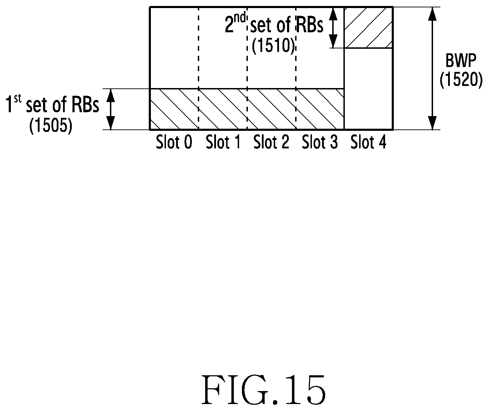

FIG. 15 illustrates an SBFD configuration according to an embodiment of the disclosure.

Referring to FIG. 15, a UE according to an embodiment may be unable to use all RBs in the UL BWP for the uplink in all symbols. For example, some RBs that may be used for the uplink inside the UL BWP 1520 in slots 0, 1, 2, and 3 may be the 1st set of RBs 1505, and some other RBs that may be used for the uplink inside the UL BWP in slot 4 may be the 2nd set of RBs 1510. As an example of the 1st set of RBs 1505 and the 2nd set of RBs 1510, the two sets of RBs may include RBs positioned at the same frequency.

According to an embodiment, the UE may determine that the number of temporary RBs is

$$N_{RBG,temp} = \lceil (N_{RB}^{ULBWP} + (N_{ULBWP}^{start} \bmod P))/P \rceil$$

. The number of temporary RBs may be determined based on the number of RBs of the UL BWP. Temporary RBs may include RBs as follows. The first temporary RBG may include as many RBs as $RBG^{size}_{0,temp} = P - N^{ULBWP}_{RB} \; mod \; P$. The last RGB may include as many RBs as $RBG^{size}_{last,temp} = \left( N^{start}_{ULBWP} + N^{ULBWP}_{RB} \right) mod \; P$ if $\left( N^{start}_{ULBWP} + N^{ULBWP}_{RB} \right) mod \; P > 0$, and may otherwise include as many RBs as $RBG^{size}_{last,temp} = P$. Remaining RBGs may include $P$ RBs. The UE may determine or identify a temporary RBG including no RBs that may be scheduled for the UL among temporary RBGs. The UE may group remaining RBGs other than the temporary RBG, thereby generating final RBGs. In addition, it may be determined that the number of bits of the FDRA field is the number of final RBGs. The final RBGs may be given a new order, except for temporary RBGs, and the $i^{th}$ bit of the FDRA field may indicate whether the final RBG is scheduled or not.

According to an embodiment, the UE may have the number or position of RBs that can be transmitted through different ULs in different symbols. In this case, the UE may determine the number of final RBG with regard to each symbol, and may determine the number of bits of the FDRA field, based on the largest number of final RBGs with regard to all symbols.

In the above-described first embodiment, it has been assumed that it is possible to schedule all first RBGs generated with reference to the UL BWP in method 1, method 2, or the second embodiment. That is, each first RBG could be indicated by PUSCH scheduling. However, as in FIG. 15, the UE may not schedule all RBs of the UL BWP for the uplink. For example, according to specific UL subband and DL subband configurations, the UE may be unable to use all RBS of the UL BWP for the uplink in all symbols. In this case, an RBG determined based on the UL BWP may solely include RBs that cannot be scheduled, and the FDRA field may include unnecessary (or unused) bits. Therefore, a method for solving the case in which the FDRA field includes unnecessary bits will now be disclosed.

According to an embodiment, the UE may determine that the number of temporary RBGs is $N_{RBG,temp} = \left\lceil (N^{ULBWP}_{RB} + (N^{start}_{ULBWP} \; mod \; P))/P \right\rceil$. The number of temporary RBGs may be determined based on the number of RBs of the UL BWP $(N^{ULBWP}_{RB})$ or the starting RB index $(N^{start}_{ULBWP})$ of the UL BWP. Temporary RBGs may include RBs as follows. The first temporary RBG may include as many RBs as $RBG^{size}_{0,temp} = P - N^{ULBWP}_{RB} \; mod \; P$. The last temporary RBG may include as many RBs as $RBG^{size}_{last,temp} = \left( N^{start}_{ULBWP} + N^{ULBWP}_{RB} \right) mod \; P$ if $\left( N^{start}_{ULBWP} + N^{ULBWP}_{RB} \right) mod \; P > 0$, and may otherwise include as many RBs as $RBG^{size}_{last,temp} = P$. Remaining temporary RBGs may include $P$ RBs.

According to an embodiment, the UE may assess, determine, or identify a temporary RBG including no RBs that may be scheduled for the UL among temporary RBGs. The UE may group only remaining RBGs other than the temporary RBG, thereby generating the RBGs. In addition, it may be determined that the number of bits of the FDRA field is the number of final RBGs. The final RBGs may be given a new order, except for temporary RBGs, and the $i^{th}$ bit of the FDRA field may indicate whether the $i^{th}$ final RBG is scheduled or not. When assessing a temporary RBG including no RBs that may be scheduled for the UL among temporary RBGs, and in case that RBs in one temporary RBG cannot be scheduled for the UL in all symbols, the temporary RBG may be deemed to include no RBs that can be scheduled for the UL.

Additionally, it may be determined that the nominal RBG size ($P$) is not the number of RBs in the UL BWP, but the number of UL schedulable RBs in the UL BWP. In case that different symbols have different numbers of UL schedulable RBs, the UE may determine that the maximum value is the number of UL schedulable RBs in the UL BWP.

Therefore, in method 1 or method 2 of the first embodiment above, or in the second embodiment, first RBGs may be replaced with final RBG determined according to the above method.

<Embodiment 3-2> designing FDRA using schedulable DL RB in DL BWP

According to an embodiment, it may be assumed that type-0 resource allocation scheme is configured for the UE. The number of RBs included in the UE's DL BWP may be referred to as $N^{DLBWP}_{RB}$. The number of RBs included in the DL subband may be referred to as $N^{DLsub}_{RB}$, and the index of the starting RB of the DL subband may be referred to as $N^{start}_{CRB-sub}$. For convenience of description, it may be assumed in the disclosure that all RBs included in the DL subband are included in RBs included in the DL BWP. However, in a specific configuration, not all RBs included in the DL subband may be included in RBs included in the DL BWP. In this case, $N^{DLsub}_{RB}$ is the number of RBs included in the DL BWP and the DL subband simultaneously. In addition, $N_{CRB-sub}^{start}$ may be the lowest index among RBs included in the DL BWP and the DL subband simultaneously. Therefore, $N_{CRB-sub}^{start}$ may be the larger value between $N_{CRB-sub}^{start}$ and $N_{BWP}^{start}$.

For reference, $N_{RB}^{DLsub}$ and $N_{CRB-sub}^{start}$ may differ according to the time domain. This is because different DL subbands may be configured according to the time domain. However, it may be assumed in the disclosure that one DL subband is configured. That is, $N_{RB}^{DLsub}$ and $N_{CRB-sub}^{start}$ are identical in the time domain. However, in case that multiple DL subbands are configured in different time domains, $N_{RB}^{DLsub}$ and $N_{CRB-sub}^{start}$ may be as follows: in case that multiple, for example, two UL subbands (indexed as #1 and #2) are configured, $N_{RB}^{DLsub}$ may be a value among $N_{RB}^{DLsub\#1}$ and $N_{RB}^{DLsub\#2}$, and $N_{CRB-sub}^{start}$ may be a value among $N_{CRB-sub\#1}^{start}$ and $N_{CRB-sub\#2}^{start}$.

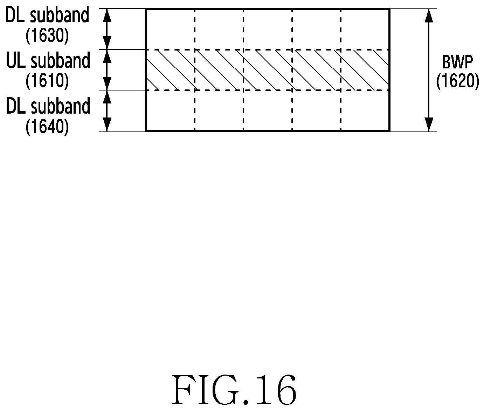

FIG. 16 illustrates an SBFD configuration according to an embodiment of the disclosure.

Referring to FIG. 16, a UE according to an embodiment may be unable to use all RBs in the DL BWP for the downlink in all symbols. For example, RBs that may be used for the downlink inside the DL BWP 1520 in slots 0, 1, 2, 3, and 4 may be RBs included in the first DL subband 1630 and RBs included in the second DL subband 1640. RBs included in the UL subband 1610 in all symbols may not be used for downlink reception.

According to 3GPP standard specifications, the number of RBGs in type-0 resource allocation scheme may be determined by the size of the DL BWP (that is, the number of RBs included in the DL BWP, $N_{RB}^{DLBWP}$). For example, referring to Table 11, if $N_{RB}^{DLBWP}$ is 275, the nominal RBG size (P) may be 16. That is, the UE may group a maximum of 16 RBs to generate one RBG. For example, the number of RBGs may be $N_{RBG} = \lceil (N_{RB}^{DLBWP} + (N_{DLBWP}^{start} \bmod P))/P \rceil$, and $N_{DLBWP}^{start}$ may be the lowest RB's index, starting from common resource block 0. If $N_{RB}^{DLBWP} = 275$ and $N_{DLBWP}^{start} = 0$, $N_{RBG} = \lceil (275 + (0 \bmod 16))/16 \rceil = 18$. Therefore, the FDRA field may need to include 18 bits. The $i$th bit (indexed in the order from the most significant bit to the least significant bit) may indicate whether the $i$th RGB has been scheduled or not.

According to an embodiment, the first RBG may include as many RBs as $RBG_0^{size} = P - N_{RB}^{DLBWP} \bmod P$. The last RBG may include as many RBs as $RBG_{last}^{size} = (N_{DLBWP}^{start} + N_{RB}^{DLBWP}) \bmod P$ if $(N_{DLBWP}^{start} + N_{RB}^{DLBWP}) \bmod P > 0$, and may otherwise include as many RBs as $RBG_{last}^{size} = P$. Remaining RBGs may include $P$ RBs. For example, if $N_{RB}^{DLBWP} = 275$ and $N_{ULBWP}^{start} = 0$, the first 17 RBGs may each include 16 RBs, and the last RBG may include 3 RBGs.

According to an embodiment, the UE may be unable to use all RBs of the DL BWP for the downlink in all symbols according to (or based on) specific UL subband and DL subband configurations. In this case, an RBG determined based on the DL BWP may solely include RBs that cannot be scheduled. In this case, the FDRA field may include unnecessary (or unused) bits. A method for solving the case in which the FDRA field includes unnecessary bits will be disclosed.

According to an embodiment, the UE may determine that the number of temporary RBs is $N_{RBG,temp} = \lceil (N_{RB}^{DLBWP} + (N_{DLBWP}^{start} \bmod P))/P \rceil$. The number of temporary RBGs may be determined based on the number of RBs of the DL BWP. Temporary RBs may include RBs as follows. The first temporary RBG may include as many RBs as $RBG_{0,temp}^{size} = P - N_{RB}^{DLBWP} \bmod P$. The last RGB may include as many RBs as $RBG_{last,temp}^{size} = (N_{DLBWP}^{start} + N_{RB}^{DLBWP}) \bmod P$ if tart $(N_{DLBWP}^{start} + N_{RB}^{DLBWP}) \bmod P > 0$, and may otherwise include as many RBs as $RBG_{last,temp}^{size} = P$. Remaining RBGs may include $P$ RBs. The UE may determine or identify a temporary RBG including no RBs that may be scheduled for the UL among temporary RBGs. The UE may group remaining RBGs other than the temporary RBG, thereby generating final RBGs. In addition, it may be determined that the number of bits of the FDRA field is the number of final RBGs. The final RBGs may be given a new order, except for temporary RBGs, and the $i^{th}$ bit of the FDRA field may indicate whether the $i^{th}$ final RBG is scheduled or not.

According to an embodiment, the UE may have a different number or position of RBs that can be used for downlink reception, depending on the configuration, in different symbols. In this case, the UE may determine the number of final RBGs with regard to each symbol. The number of bits of the FDRA field may be determined based on the largest number of final RBGs with regard to all symbols.

Additionally, it may be determined that the nominal RBG size (P) is not the number of RBs in the DL BWP, but the number of DL schedulable RBs in the DL BWP. In case that different symbols have different numbers of DL schedulable RBs, the UE may determine that the maximum value is the number of DL schedulable RBs in the DL BWP.

For example, if $N_{RB}^{DLBWP} = 275$ and $N_{ULBWP}^{start} = 0$, the first 17 temporary RBGs may each include 16 RBs, and the last temporary RBG may include 3 RBGs. That is,

the $i^{th}$ temporary RBG may include RB {16*(i-1), 16*(i-1)+1, ..., 16*i-1}, i=1,2,...,17, and
the 18$^{th}$ temporary RBG may include RB {272, 273, 274}.

It may be assumed that all DL symbols have a UL subband configured therefor, and the UL subband configuration is $N_{RB}^{ULsub} = 50$ and $N_{CRB-sub}^{start} = 50$. That is, common RB indices {50, 51, ..., 99} are used for the UL subband and thus cannot used for DL reception. Therefore, the 4$^{th}$ temporary RBG including RBs {48,49,...,63}, the 5$^{th}$ temporary RBG including RBs {64,65,...,79}, and the 6$^{th}$ temporary RBG including RBs {80,81,...,95} may have no RB used for DL reception. Therefore, three temporary RBGs may be excluded from final RBGs. That is, final RBGs may be 15 RBGs obtained by excluding 3 temporary RBGs from 18 temporary RBGs. Therefore, the FDRA field may be configured by 15 bits, and each bit may indicate whether 15 final RBGs are scheduled or not.

Referring to FIG. 16, the index (common RB index) of the starting RB of the first DL subband 1630 may be referred to as $N_{CRB-sub\#1}^{start}$, the number of RBs may be referred to as $N_{RB}^{DLsub\#1}$, the index (common RB index) of the starting RB of the second DL subband 1640 may be referred to as $N_{CRB-sub\#2}^{start}$, and the number of RBs may be referred to as $N_{RB}^{DLsub\#2}$. The UE may determine RBGs in respective DL subbands. The same nominal RGB size may be used in this regard.

According to an embodiment, the UE may determine that the number of RBGs of the first DL subband is $N_{RBG,1} = \left\lceil (N_{RB}^{DLsub\#1} + (N_{CRB-sub\#1}^{start} \bmod P))/P \right\rceil$. Temporary RBGs may include RBs as follows. The first RBG of the first DL subband may include as many RBs as $RBG_{0,DLsub\#1}^{size} = P - N_{RB}^{DLsub\#1} \bmod P$. The last RBG of the first DL subband may include as many RBs as $RBG_{last,DLsub\#1}^{size} = \left( N_{CRB-sub\#1}^{start} + N_{RB}^{DLsub\#1} \right) \bmod P$ if $\left( N_{CRB-sub\#1}^{start} + N_{RB}^{DLsub\#1} \right) \bmod P > 0$, and may otherwise include as many RBs as $RBG_{last,DLsub\#1}^{size} = P$.

According to an embodiment, the UE may determine that the number of RBGs of the second DL subband is $N_{RBG,2} = \left\lceil (N_{RB}^{DLsub\#2} + (N_{CRB-sub\#2}^{start} \bmod P))/P \right\rceil$. Temporary RBGs may include RBs as follows. The first RBG of the second DL subband may include as many RBs as $RBG_{0,DLsub\#1}^{size} = P - N_{RB}^{DLsub\#2} \bmod P$. The last RBG of the second DL subband may include as many RBs as $RBG_{last,DLsub\#2}^{size} = \left( N_{CRB-sub\#2}^{start} + N_{RB}^{DLsub\#2} \right) \bmod P$ if $\left( N_{CRB-sub\#2}^{start} + N_{RB}^{DLsub\#2} \right) \bmod P > 0$, and may otherwise include as many RBs as $RBG_{last,DLsub\#2}^{size} = P$.

According to an embodiment, the total number of RBGs of the UE may be $N_{RBG,1} + N_{RBG,2}$. Therefore, the FDRA field may include $N_{RBG,1} + N_{RBG,2}$ bits.

It may be assumed that type-1 resource allocation scheme is configured for the UE. According to type-1 resource allocation scheme, the index ($RB_{start}$) of the starting RB and the number ($L_{RBs}$) of continuously scheduled RBs may be represented by a resource indication value (RIV). The RIV value is as follows:

if $(L_{RBs} - 1) \leq \left\lfloor N_{BWP}^{size}/2 \right\rfloor$ then

$$RIV = N_{BWP}^{size}(L_{RBs} - 1) + RB_{start}$$

else

$$RIV = N_{BWP}^{size}(N_{BWP}^{size} - L_{RBs} + 1) + (N_{BWP}^{size} - 1 - RB_{start})$$

where $L_{RBs} \geq 1$ and shall not exceed $N_{BWP}^{size} - RB_{start}$.

The RIV determined in the above-described method has the value of one of $0, 1, \ldots, N_{BWP}^{size} * (N_{BWP}^{size} + 1)/2 - 1$. Therefore, the RIV occupies $\left\lceil \log_2(N_{BWP}^{size} * (N_{BWP}^{size} + 1)/2) \right\rceil$ bits.

Previously, similarly to type- resource allocation, not all RBs of the DL BWP may be capable of downlink transmission in all symbols. In this case, if the RIV value is determined to be $N_{BWP}^{size}$, which is the size of the DL BWP, an unnecessary value is then included in the RIV.

According to an embodiment, the UE may generate the RIV value based on the number of RBs that may be scheduled for the DL in the DL BWP, instead of $N_{BWP}^{size}$, which is the size of the DL BWP. In addition, the index of RBs that may be scheduled for the DL in the DL BWP may be determined in ascending order of frequency, starting from 0. The RIV regarding the RB index may be determined or identified as follow:

if $(L_{RBs} - 1) \leq \lfloor N_{DLRB}/2 \rfloor$ then

$$RIV = N_{DLRB}(L_{RBs} - 1) + RB_{start}$$

else

$$RIV = N_{DLRB}(N_{DLRB} - L_{RBs} + 1) + (N_{DLRB} - 1 - RB_{start})$$

where $L_{RBs} \geq 1$ and shall not exceed $N_{DLRB} - RB_{start}$.

For reference, above-mentioned $RB_{start}$ may be the index of the starting RB according to the index of RBs that may be scheduled for the DL in the DL BWP, and $L_{RBs}$ may be the number of scheduled RBs according to the index of RBs that may be scheduled for the DL in the DL BWP.

The RIV determined in the above-described method has the value of one of $0, 1, \ldots, N_{DLRB} * (N_{DLRB} + 1)/2 - 1$. Therefore, the RIV may occupy $\left\lceil \log_2(N_{DLRB} * (N_{DLRB} + 1)/2) \right\rceil$ bits.

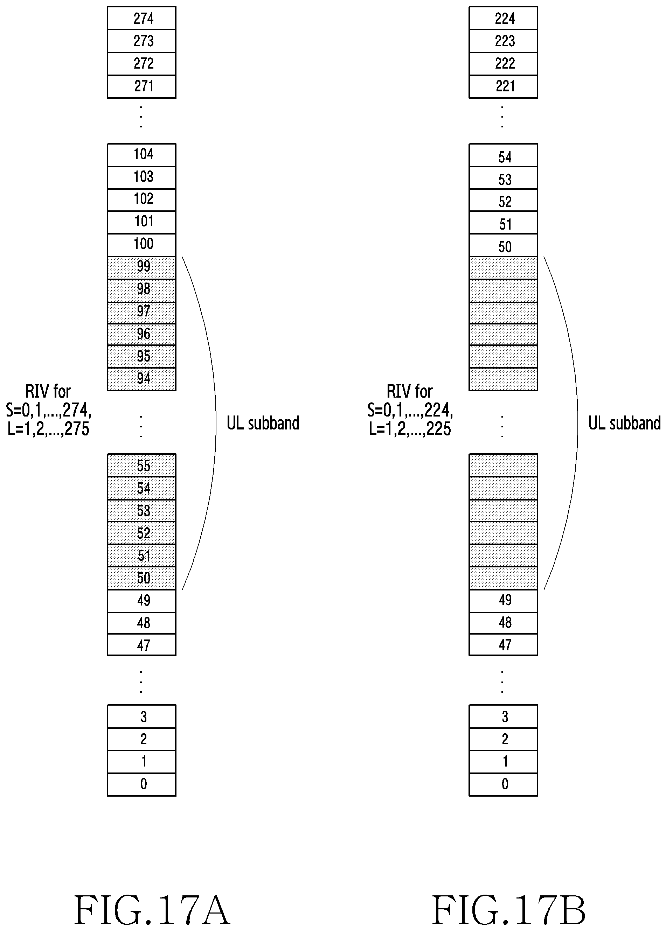

FIG. 17A and FIG. 17B illustrate an RIV configuration information according to an embodiment of the disclosure.

For example, referring to FIG. 17A, if $N_{RB}^{DLBWP} = 275$ and $N_{DLBWP}^{start} = 0$, RBs {0,1,...,274} are included in the DL BWP. In case that the UE does not consider UL subband and DL subband configurations, the UE may have the value of one of $RB_{start} = 0, 1, \ldots, N_{RB}^{DLBWP} - 1$, and may have the value of one of $L_{RBs} = 1, 2, \ldots, N_{RB}^{DLBWP}$. That is, the resource indicator value (RIV) may be determined based on the value of S and L.

Referring to FIG. 17B, it may be assumed that all DL symbols have a UL subband configured therefor, and the UL subband configuration is $N_{RB}^{ULsub} = 50$ and $N_{CRB-sub}^{start} = 50$. That is, common RB indices {50, 51, ..., 99} are used for the UL subband thus cannot be used for DL reception. That is, RBs that the UE can use are {0,1,...,49,100,101,...,274}, and in total $N_{DLRB} = 225$.

If it is assumed that $RB_{start} = 30$ and $L_{RBs} = 100$, the RIV value may be 225*99+30 = 22305. RBs scheduled according to $RB_{start} = 30$ and $L_{RBs} = 100$ may be {30,31,...,49,100,101,...,179}. From the RB having the index of $RB_{start}$, as many schedulable RBS as $L_{RBs}$ may be selected. The index of $RB_{start}$ may be the index of schedulable RBs.

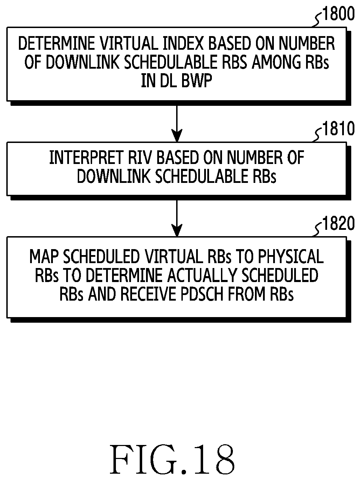

FIG. 18 is a flowchart regarding a method for determining the RIV value of a DL subband according to the disclosure.

Referring to FIG. 18, in step 1800 according to an embodiment, the UE may have a DL BWP configured by the base station through an upper layer signal (for example, RRC signaling). For example, the DL BWP configuration may include the subcarrier spacing of the DL BWP, the index of the lowest RB of the DL BWP from "point A" (for example, index based on common RB index), and the number of RBs included in the DL BWP. The UE may determine downlink schedulable RBs among the RBs included in the DL BWP. If RBs cannot be scheduled for the downlink in all symbols, the RBs may be deemed to be downlink non-schedulable RBs. The UE may index the downlink schedulable RBs in ascending order of frequency. The RB having index 0 has the lowest index among the downlink schedulable RBs. The index may be called or referred to as a virtual index. For example, the UE may determine the virtual index, based on the number of downlink schedulable RBs among RBS in the LD BWP.

According to an embodiment, in step 1810, the UE may interpret the RIV, based on the number of downlink schedulable RBs. The downlink schedulable RBs may be given virtual indices 0, 1, ..., $N_{DLRB}$-1. $N_{DLRB}$ may be the number of downlink schedulable RBs. The RIV may have the value of $RB_{start} = 0,1, ..., N_{DLRB} - 1$ and $L_{RBs} = 1,2, ... , N_{DLRB}$. The UE may acquire the RIV value from the FDRA field. The UE may determine the starting index determined by the virtual index and the number of RBs from the RIV value.

According to an embodiment, in step 1820, the UE may convert the downlink scheduled virtual index to the actual UE's physical index. The physical index may be at least one of a common RB index of a BWP-specific index. The UE may receive a PDSCH in RBs scheduled according to the physical index. For example, the UE may match scheduled virtual RBs to physical RBs, thereby determining actually scheduled RBs, and may receive a PDSCH from RBs.

According to an embodiment, a method performed by a terminal in a wireless communication system is provided. The method may include receiving downlink control information (DCI) for scheduling a physical uplink shared channel (PUSCH) from a base station, in case that the PUSCH is scheduled to overlap uplink (UL) symbols, transmitting the PUSCH to the base station on first resource block groups (RBGs) identified based on the FDRA information, and in case that the PUSCH is scheduled to overlap sub band full duplex (SBFD) symbols, transmitting the PUSCH to the base station on second RBGs identified based on the FDRA information. The DCI may include frequency domain resource assignment (FDRA) information for the PUSCH.

According to an embodiment, the method may further include receiving information regarding the number of resource blocks (RBs) included in a UL subband corresponding to the SBFD symbols, through radio resource control (RRC) signaling, from the base station. The second RBGs may have a size determined based on the number of RBs included in the UL subband, and a number of bits of the FDRA information may be determined based on the maximum value of a number determined based on the number of first RBGs and a number determined based on the number of second RBGs.

According to an embodiment, a number of bits of the FDRA information may be based on the number of first RBGs, and the second RBGs may have a size determined based on the number of the bits of the FDRA information.

According to an embodiment, the number of RBs included in a UL bandwidth part (BWP) for determining the number of first RBGs may be different from the number of RBs included in a UL subband for determining the number of second RBGs, the FDRA information may include a bitmap, and each of bits of the bitmap may correspond to at least one RBG included in the first RBGs or may correspond to at least one RBG included in the second RBGs.

According to an embodiment, a terminal in a wireless communication system may include a transceiver and a controller coupled to the transceiver. The controller may be configured to receive downlink control information (DCI) for scheduling a physical uplink shared channel (PUSCH) from a base station, in case that the PUSCH is scheduled to overlap uplink (UL) symbols, transmit the PUSCH to the base station on first resource block groups (RBGs) identified based frequency domain resource assignment (FDRA) information for the PUSCH, included in the DCI, and in case that the PUSCH is scheduled to overlap sub band full duplex (SBFD) symbols, transmit the PUSCH to the base station on second RBGs identified based on the FDRA information.

According to an embodiment, the controller may be configured to receive information regarding the number of resource blocks (RBs) included in a UL subband corresponding to the SBFD symbols, through radio resource control (RRC) signaling, from the base station. The second RBGs may have a size determined based on the number of RBs included in the UL subband, and a number of bits of the FDRA information may be determined based on the maximum value of a number determined based on the number of first RBGs and a number determined based on the number of second RBGs.

According to an embodiment, a number of bits of the FDRA information may be based on the number of first RBGs, and the second RBGs may have a size determined based on the number of the bits of the FDRA information.

According to an embodiment, the number of RBs included in a UL bandwidth part (BWP) for determining the number of first RBGs may be different from the number of RBs included in a UL subband for determining the number of second RBGs, the FDRA information may include a bitmap, and each of bits of the bitmap may correspond to at least one RBG included in the first RBGs or may correspond to at least one RBG included in the second RBGs.

According to an embodiment, a method performed by a base station in a wireless communication system is provided. The method may include transmitting downlink control information (DCI) for scheduling a physical uplink shared channel (PUSCH) to a terminal, in case that the PUSCH is scheduled to overlap uplink (UL) symbols, receiving the PUSCH from the terminal on first resource block groups (RBGs) based on the FDRA information, and in case that the PUSCH is

scheduled to overlap sub band full duplex (SBFD) symbols, receiving the PUSCH from the terminal on second RBGs based on the FDRA information. The DCI may include frequency domain resource assignment (FDRA) information for the PUSCH.

According to an embodiment, the method may further include transmitting information regarding the number of resource blocks (RBs) included in a UL subband corresponding to the SBFD symbols, through radio resource control (RRC) signaling, to the terminal. The second RBGs may have a size based on the number of RBs included in the UL subband, and a number of bits of the FDRA information may be determined based on the maximum value of a number determined based on the number of first RBGs and a number determined based on the number of second RBGs.

According to an embodiment, a number of the bits of the FDRA information may be based on the number of first RBGs, and the second RBGs may have a size determined based on the number of the bits of the FDRA information.

According to an embodiment, the number of RBs included in a UL bandwidth part (BWP) for determining the number of first RBGs may be different from the number of RBs included in a UL subband for determining the number of second RBGs, the FDRA information may include a bitmap, and each of bits of the bitmap may correspond to at least one RBG included in the first RBGs or may correspond to at least one RBG included in the second RBGs.

According to an embodiment, a base station in a wireless communication system may include a transceiver and a controller coupled to the transceiver. The controller may be configured to transmit downlink control information (DCI) for scheduling a physical uplink shared channel (PUSCH) to a terminal, in case that the PUSCH is scheduled to overlap uplink (UL) symbols, receive the PUSCH from the terminal on first resource block groups (RBGs) based frequency domain resource assignment (FDRA) information for the PUSCH, included in the DCI, and in case that the PUSCH is scheduled to overlap sub band full duplex (SBFD) symbols, receive the

PUSCH from the terminal on second RBGs based on the FDRA information.

According to an embodiment, the controller may be configured to transmit information regarding the number of resource blocks (RBs) included in a UL subband corresponding to the SBFD symbols, through radio resource control (RRC) signaling, to the terminal. The second RBGs may have a size based on the number of RBs included in the UL subband, and a number of bits of the FDRA information may be determined based on the maximum value of a number determined based on the number of first RBGs and a number determined based on the number of second RBGs.

According to an embodiment, a number of bits of the FDRA information may be based on the number of first RBGs, and the second RBGs may have a size determined based on the number of the bits of the FDRA information.

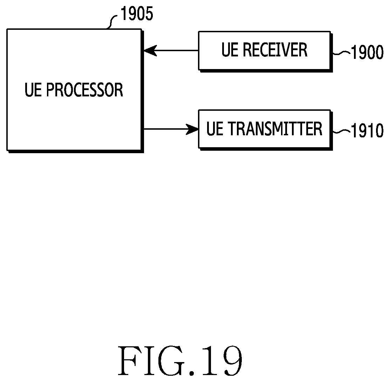

FIG. 19 illustrates a structure of a UE in a wireless communication system according to an embodiment of the disclosure.

Referring to FIG. 19, the UE may include a transceiver, which refers to a UE receiver 1900 and a UE transmitter 1910 as a whole, a memory (not illustrated), and a UE processor 1905 (or UE controller or processor). The UE transceiver 1900 and 1910, the memory, and the UE processor 1905 may operate according to the above-described communication methods of the UE. However, components of the UE are not limited to the above-described example. For example, the UE may include a larger or smaller number of components than the above-described components. Furthermore, the transceiver, the memory, and the processor may be implemented in the form of a single chip.

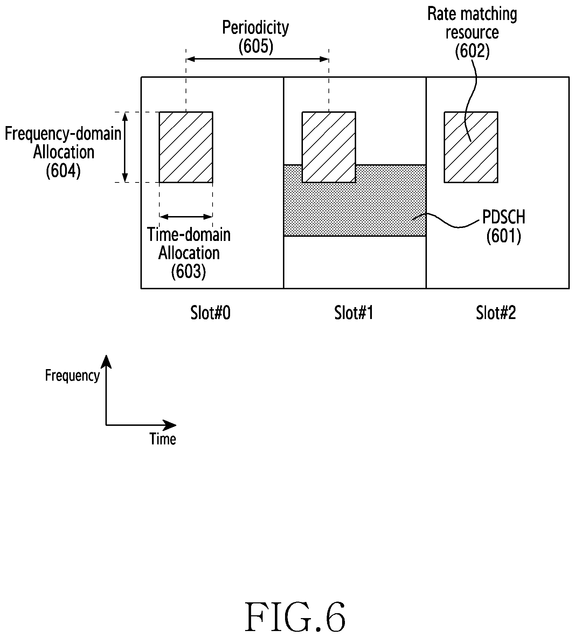

The UE described in FIG. 19 of the disclosure may correspond to the UE described in FIGS. 1 to 18 and 20 of the disclosure.

According an embodiment, the transceiver 1900 and 1910 may transmit/receive signals with the base station. The signals may include control information and data. To this end, the transceiver 1900 and 1910 may include an RF transmitter configured to up-convert and amplify the frequency of transmitted signals, an RF receiver configured to low-noise-amplify received signals and down-convert the frequency thereof, and the like. However, this is only an embodiment of the transceiver 1900 and 1910, and the components of the transceiver 1900 and 1910 are not limited to the RF transmitter and the RF receiver.

In addition, the transceiver 1900 and 1910 may receive signals through a radio channel, output the same to the UE processor 1905 or a processor included in the UE processor 1905, and transmit signals output from the UE processor 1906 or the processor through the radio channel.

According to an embodiment, the memory may store programs and data necessary for operations of the UE. In addition, the memory may store control information or data included in signals transmitted/received by the UE. The memory may include a storage medium such as a ROM, a RAM, a hard disk, a CD-ROM, or a DVD, or a combination of storage media. In addition, the memory may include multiple memories.

Also, according to an embodiment, the UE processor 1905 or the processor included in the UE processor 1905 may control a series of operations so that the UE can operate according to the above-described embodiments. For example, the UE processor 1905 or the processor included in the UE processor 1905 may control components of the UE to receive DCI configured in two layers so as to simultaneously receive multiple PDSCHs. The UE processor 1905 or the processor included in the UE processor 1905 may include multiple processors, and the processor may perform operations of controlling the components of the UE by executing programs stored in the memory.

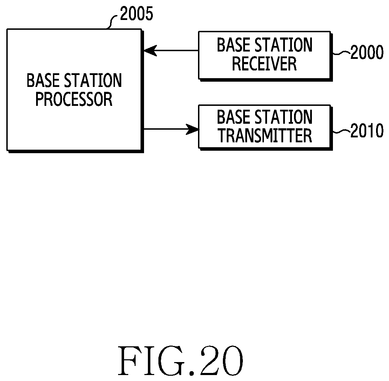

FIG. 20 illustrates a structure of a base station in a wireless communication system according to an embodiment

**EP 4 568 384 A1**

of the disclosure.

Referring to FIG. 20, the base station may include a transceiver, which refers to a base station receiver 2000 and a base station transmitter 2010 as a whole, a memory (not illustrated), and a base station processor 2005 (or base station controller or processor). The base station transceiver 2000 and 2010, the memory, and the base station processor 2005 may operate according to the above-described communication methods of the base station. However, components of the base station are not limited to the above-described example. For example, the base station may include a larger or smaller number of components than the above-described components. Furthermore, the transceiver, the memory, and the processor may be implemented in the form of a single chip.

The base station described in FIG. 20 of the disclosure may correspond to the base station described in FIGS. 1 to 20 of the disclosure.

According to an embodiment, the transceiver 2000 and 2010 may transmit/receive signals with the base station. The signals may include control information and data. In order to transmit/receive signals, the transceiver 2000 and 2010 may include an RF transmitter configured to up-convert and amplify the frequency of transmitted signals, an RF receiver configured to low-noise-amplify received signals and down-convert the frequency thereof, and the like. However, this is only an embodiment of the transceiver 2000 and 2010, and the components of the transceiver 2000 and 2010 are not limited to the RF transmitter and the RF receiver.

In addition, the transceiver 2000 and 2010 may receive signals through a radio channel, output the same to the base station processor 2005 or a processor included in the base station processor 2005, and transmit signals output from the UE processor 2005 or the processor included in the base station processor 2005 through the radio channel.

According to an embodiment, the memory may store programs and data necessary for operations of the base station. In addition, the memory may store control information or data included in signals transmitted/received by the base station. The memory may include storage media such as a ROM, a RAM, a hard disk, a CD-ROM, and a DVD, or a combination of storage media. In addition, the memory may include multiple memories.

According to an embodiment, the base station processor 2005 or the processor included in the base station processor 2005 may control a series of operations so that the base station can operate according to the above-described embodiments. For example, the base station processor 2005 or the processor may control components of the base station to configure DCI configured in two layers including allocation information regarding multiple PDSCHs and to transmit the same. The base station processor 2005 or the processor may include multiple processors, and the processor may perform operations of controlling the components of the base station by executing programs stored in the memory.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of embodiments of the disclosure and help understanding of embodiments of the disclosure, and are not intended to limit the scope of embodiments of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. As an example, a part of a first embodiment of the disclosure may be combined with a part of a second embodiment to operate a base station and a terminal. Moreover, although the above embodiments have been described based on the FDD LTE system, other variants based on the technical idea of the embodiments may also be implemented in other communication systems such as TDD LTE, and 5G, or NR systems.

In the drawings in which methods of the disclosure are described, the order of the description does not always correspond to the order in which steps of each method are performed, and the order relationship between the steps may be changed or the steps may be performed in parallel.

Alternatively, in the drawings in which methods of the disclosure are described, some elements may be omitted and only some elements may be included therein without departing from the essential spirit and scope of the disclosure.

In addition, in methods of the disclosure, some or all of the contents of each embodiment may be implemented in combination without departing from the essential spirit and scope of the disclosure.

Various embodiments of the disclosure have been described above. The above description of the disclosure is for the purpose of illustration, and is not intended to limit embodiments of the disclosure to the embodiments set forth herein. Those skilled in the art will appreciate that other specific modifications and changes may be easily made to the forms of the disclosure without changing the technical idea or essential features of the disclosure. The scope of the disclosure is defined by the appended claims, rather than the above detailed description, and the scope of the disclosure should be construed to include all changes or modifications derived from the meaning and scope of the claims and equivalents thereof.

**Claims**

1. A method performed by a terminal in a wireless communication system, the method comprising:

   receiving, from a base station, downlink control information (DCI) for scheduling a physical uplink shared channel (PUSCH), the DCI comprising frequency domain resource assignment (FDRA) information for the PUSCH;
   in case that the PUSCH is scheduled to overlap uplink (UL) symbols, transmitting, to the base station, the PUSCH on first resource block groups (RBGs) identified based on the FDRA information; and
   in case that the PUSCH is scheduled to overlap sub band full duplex (SBFD) symbols, transmitting, to the base station, the PUSCH on second RBGs identified based on the FDRA information.

2. The method of claim 1, further comprising:

   receiving, from the base station, information on a number of resource blocks (RBs) included in a UL subband corresponding to the SBFD symbols via radio resource control (RRC) signaling,
   wherein a size of the second RBGs is determined based on the number of the RBs included in the UL subband, and
   wherein a number of bits of the FDRA information is determined based on the maximum value of a number determined based on a number of the first RBGs and a number determined based on a number of the second RBGs.

3. The method of claim 1, wherein a number of bits of the FDRA information is based on a number of the first RBGs, and wherein a size of the second RBGs is determined based on the number of the bits of the FDRA information.

4. The method of claim 1, wherein a number of RBs included in a UL bandwidth part (BWP) for determining a number of the first RBGs is different from a number of RBs included in a UL subband for determining a number of the second RBGs, and
   wherein the FDRA information comprises a bitmap, and each of bits of the bitmap corresponds to at least one RBG included in the first RBGs or at least one RBG included in the second RBGs.

5. A terminal in a wireless communication system, the terminal comprising:

   a transceiver; and
   a controller coupled to the transceiver,
   wherein the controller is configured to:

      receive, from a base station, downlink control information (DCI) for scheduling a physical uplink shared channel (PUSCH),
      in case that the PUSCH is scheduled to overlap uplink (UL) symbols, transmit, to the base station, the PUSCH on first resource block groups (RBGs) identified based frequency domain resource assignment (FDRA) information for the PUSCH, included in the DCI, and
in case that the PUSCH is scheduled to overlap sub band full duplex (SBFD) symbols, transmit, to the base station, the PUSCH on second RBGs identified based on the FDRA information.

6. The terminal of claim 5, wherein the controller is configured to:

receive, from the base station, information on a number of resource blocks (RBs) included in a UL subband corresponding to the SBFD symbols via radio resource control (RRC) signaling,
wherein a size of the second RBGs is determined based on the number of the RBs included in the UL subband, and
wherein a number of bits of the FDRA information is determined based on the maximum value of a number determined based on a number of the first RBGs and a number determined based on a number of the second RBGs.

7. The terminal of claim 5, wherein a number of bits of the FDRA information is based on a number of the first RBGs, and wherein a size of the second RBGs is determined based on the number of the bits of the FDRA information.

8. The terminal of claim 5, wherein a number of RBs included in a UL bandwidth part (BWP) for determining a number of the first RBGs is different from a number of RBs included in a UL subband for determining a number of the second RBGs, and
wherein the FDRA information comprises a bitmap, and each of bits of the bitmap corresponds to at least one RBG included in the first RBGs or at least one RBG included in the second RBGs.

9. A method performed by a base station in a wireless communication system, the method comprising:

transmitting, to a terminal, downlink control information (DCI) for scheduling a physical uplink shared channel (PUSCH), the DCI comprising frequency domain resource assignment (FDRA) information for the PUSCH;
in case that the PUSCH is scheduled to overlap uplink (UL) symbols, receiving, from the terminal, the PUSCH on first resource block groups (RBGs) based on the FDRA information; and
in case that the PUSCH is scheduled to overlap sub band full duplex (SBFD) symbols, receiving, from the terminal, the PUSCH on second RBGs based on the FDRA information.

10. The method of claim 9, further comprising:

transmitting, to the terminal, information on a number of resource blocks (RBs) included in a UL subband corresponding to the SBFD symbols via radio resource control (RRC) signaling,
wherein a size of the second RBGs is based on the number of the RBs included in the UL subband, and
wherein a number of bits of the FDRA information is determined based on the maximum value of a number determined based on a number of the first RBGs and a number determined based on a number of the second RBGs.

11. The method of claim 9, wherein a number of bits of the FDRA information is based on a number of the first RBGs, and wherein a size of the second RBGs is determined based on the number of the bits of the FDRA information.

12. The method of claim 9, wherein a number of RBs included in a UL bandwidth part (BWP) for determining a number of the first RBGs is different from a number of RBs included in a UL subband for determining a number of the second RBGs, and
wherein the FDRA information comprises a bitmap, and each of bits of the bitmap corresponds to at least one RBG included in the first RBGs or at least one RBG included in the second RBGs.

13. A base station in a wireless communication system, the base station comprising:

a transceiver; and
a controller coupled to the transceiver,
wherein the controller is configured to:

transmit, to a terminal, downlink control information (DCI) for scheduling a physical uplink shared channel (PUSCH),

in case that the PUSCH is scheduled to overlap uplink (UL) symbols, receive, from the terminal, the PUSCH on first resource block groups (RBGs) based frequency domain resource assignment (FDRA) information for the PUSCH, included in the DCI, and

in case that the PUSCH is scheduled to overlap sub band full duplex (SBFD) symbols, receive, from the terminal, the PUSCH on second RBGs based on the FDRA information.

14. The base station of claim 9, wherein the controller is configured to:

transmit, to the terminal, information on a number of resource blocks (RBs) included in a UL subband corresponding to the SBFD symbols via radio resource control (RRC) signaling,

wherein a size of the second RBGs is based on the number of the RBs included in the UL subband, and

wherein a number of bits of the FDRA information is determined based on the maximum value of a number determined based on a number of the first RBGs and a number determined based on a number of the second RBGs.

15. The base station of claim 9, wherein a number of bits of the FDRA information is based on a number of the first RBGs, and

wherein a size of the second RBGs is determined based on the number of the bits of the FDRA information.

One subframe
(110)

$N_{symb}^{subframe}$ OFDM symbols

1 OFDM symbols (102)

1 subcarrier (103)

$k = N_{RB,x}^{max,\mu} N_{sc}^{RB} - 1$

Resource block $N_{sc}^{RB}$ subcarriers (104)

$N_{RB}^{\mu} N_{sc}^{RB}$ subcarriers

Resource element (k,l) (101)

Frequency

Time

$\bar{l} = 0$

$\bar{l} = 14 \cdot 2^{\mu} - 1$

$k = 0$

FIG.1

1 frame (200)

1 subframe (201)

μ=0 (204) | 0 | 1 | 2 | 3 | 4 | 5 | 6 | 7 | 8 | 9

slot (202)

μ=1 (205) | 0 | 1 | 2 | 3 | 4 | 5 | 6 | 7 | 8 | 9 | 10 | 11 | 12 | 13 | 14 | 15 | 16 | 17 | 18 | 19

slot (203)

FIG.2

BWP#1
(301)

BWP#2
(302)

Frequency

UE bandwidth
(300)

FIG.3

Duration
(404)

Frequency
resources
(403)

UE bandwidth
part (410)

Frequency

Time

Slot (420)

Control resource set#1 (401)

Control resource set#2 (402)

# FIG.4

1 symbol
(501)

DMRS
(505)

1 PRB
(502)

CCE
(504)

REG
(503)

FIG.5

Periodicity
(605)

Rate matching
resource
(602)

Frequency-domain
Allocation
(604)

Time-domain
Allocation
(603)

PDSCH
(601)

Slot#0          Slot#1          Slot#2

Frequency

Time

FIG.6

RA type 0
(700)

715

| Bitmap |
|---|

RA type 1
(705)

720                          725

| Starting VRB | Length |
|---|---|

Both RA type
0 & 1
(710)

730                                          735

| 1 bit for RA type indication | Max{payload for RA type 0, payload for RA type 1} |
|---|---|

# FIG.7

S
(800)

L (805)

| 0 | 1 | 2 | 3 | 4 | 5 | 6 | 7 | 8 | 9 | 10 | 11 | 12 | 13 |

OFDM symbol

$$\text{Slot}\left[n \cdot \frac{2^{\mu}\text{PDSCH}}{2^{\mu}\text{PDCCH}}\right] + K_0 \ (810)$$

# FIG.8

$\mu_{PDCCH}=1$

(900)

PDCCH

Slot n    Slot n+1

... t

$\mu_{PDSCH}=1$

... t

PDSCH

Slot n + $K_0$

$\mu_{PDCCH}=1$

(905)

PDCCH

Slot n    Slot n+1    ...    t

$\mu_{PDSCH}=2$

... t

PDSCH

$Slot\left\lfloor n \cdot \dfrac{2^{\mu_{PDSCH}}}{2^{\mu_{PDCCH}}}\right\rfloor$    ...    $Slot\left\lfloor n \cdot \dfrac{2^{\mu_{PDSCH}}}{2^{\mu_{PDCCH}}}\right\rfloor + K_0$

# FIG.9

FIG.10

FIG.11

FIG.12

| (274,274) | RGB#17 |
| (273,273) | |
| (272,272) | |
| (271,271) | |
| (270,270) | |
| (269,269) | |
| (268,268) | |
| (267,267) | |
| (266,266) | |
| (265,265) | |
| (264,264) | RGB#16 |
| (263,263) | |
| (262,262) | |
| (261,261) | |
| (260,260) | |
| (259,259) | |
| (258,258) | |
| (257,257) | |
| (256,256) | |

(99,99,49) RGB#16
(98,98,48)
(97,97,47) RGB#15
(96,96,46)
(95,95,45)
(94,94,44)
(93,93,43) RGB#14
(92,92,42)
(91,91,41)
(90,90,40) RGB#13
(89,89,39)
(88,88,38)
(87,87,37) RGB#12
(86,86,36)
(85,85,35)
(84,84,34) RGB#11
(83,83,33)

(99,99,49) RGB#17
(98,98,48)
(97,97,47) RGB#16
(96,96,46)
(95,95,45) RGB#15
(94,94,44)
(93,93,43) RGB#14
(92,92,42)
(91,91,41)
(90,90,40) RGB#13
(89,89,39)
(88,88,38)
(87,87,37) RGB#12
(86,86,36)
(85,85,35)
(84,84,34) RGB#11
(83,83,33)

(99,99,49) RGB#12
(98,98,48)
(97,97,47)
(96,96,46) RGB#11
(95,95,45)
(94,94,44)
(93,93,43)
(92,92,42)
(91,91,41) RGB#10
(90,90,40)
(89,89,39)
(88,88,38)
(87,87,37) RGB#9
(86,86,36)
(85,85,35)
(84,84,34)

(15,15)
(14,14)
(13,13)
(12,12)
(11,11)
(10,10)
(9,9)
(8,8)
(7,7) RGB#0
(6,6)
(5,5)
(4,4)
(3,3)
(2,2)
(1,1)
(0,0)

(64,64,14)
(63,63,13) RGB#4
(62,62,12)
(61,61,11)
(60,60,10) RGB#3
(59,59,9)
(58,58,8)
(57,57,7) RGB#2
(56,56,6)
(55,55,5)
(54,54,4) RGB#1
(53,53,3)
(52,52,2)
(51,51,1) RGB#0
(50,50,0)

(64,64,14)
(63,63,13) RGB#4
(62,62,12)
(61,61,11)
(60,60,10) RGB#3
(59,59,9)
(58,58,8)
(57,57,7) RGB#2
(56,56,6)
(55,55,5)
(54,54,4) RGB#1
(53,53,3)
(52,52,2)
(51,51,1) RGB#0
(50,50,0)

(63,63,13) RGB#3
(62,62,12)
(61,61,11)
(60,60,10)
(59,59,9)
(58,58,8) RGB#2
(57,57,7)
(56,56,6)
(55,55,5)
(54,54,4) RGB#1
(53,53,3)
(52,52,2)
(51,51,1) RGB#0
(50,50,0)

1311
(Common RB index,
BWP-specific RB index)

1312
(Common RB index,
BWP-specific RB index,
Subband-specific RB index)

1313
(Common RB index,
BWP-specific RB index,
Subband-specific RB index)

1314
(Common RB index,
BWP-specific RB index,
Subband-specific RB index)

FIG.13

1400

DETERMINE NOMINAL RGB SIZE WITH REFERENCE
TO NUMBER OF RBs INCLUDED IN UL BWP

1410

GENERATE FIRST RBGs AND DETERMINE NUMBER
OF FIRST RBGs, BASED ON NOMINAL RGB SIZE
AND RBs INCLUDED IN UL BWP

1420

DETERMINE NUMBER OF BITS OF FDRA FIELD,
BASED ON NUMBER OF FIRST RBGs

1430

GENERATE SECOND RBGs OF UL SUBBAND AND
DETERMINE NUMBER OF SECOND RBGs, BASED
ON NUMBER OF BITS OF FDRA FIELD AND UL
SUBBAND CONFIGURATION INFORMATION

1440

ASSESS WHETHER FIRST RBGs ARE SCHEDULED
OR SECOND RBGs ARE SCHEDULED ACCORDING
TO SCHEDULING INFORMATION

1450

DETERMINE FIRST OR SECOND RBGs SCHEDULED
ACCORDING TO ASSESSMENT AND TRANSMIT
PUSCH

FIG.14

FIG.15

FIG.16

| |
|---|
| 274 |
| 273 |
| 272 |
| 271 |

⋮

| |
|---|
| 104 |
| 103 |
| 102 |
| 101 |
| 100 |
| 99 |
| 98 |
| 97 |
| 96 |
| 95 |
| 94 |

RIV for
S=0,1,...,274,
L=1,2,...,275

⋮

| |
|---|
| 55 |
| 54 |
| 53 |
| 52 |
| 51 |
| 50 |
| 49 |
| 48 |
| 47 |

⋮

| |
|---|
| 3 |
| 2 |
| 1 |
| 0 |

UL subband

FIG.17A

| |
|---|
| 224 |
| 223 |
| 222 |
| 221 |

⋮

| |
|---|
| 54 |
| 53 |
| 52 |
| 51 |
| 50 |
| |
| |
| |
| |
| |
| |

RIV for
S=0,1,...,224,
L=1,2,...,225

⋮

| |
|---|
| |
| |
| |
| |
| |
| |
| 49 |
| 48 |
| 47 |

⋮

| |
|---|
| 3 |
| 2 |
| 1 |
| 0 |

UL subband

FIG.17B

```
                                                      ⌐1800
┌──────────────────────────────────────────────┐
│  DETERMINE VIRTUAL INDEX BASED ON NUMBER       │
│  OF DOWNLINK SCHEDULABLE RBS AMONG RBs         │
│                 IN DL BWP                      │
└──────────────────────────────────────────────┘
                        │
                        ▼                 ⌐1810
┌──────────────────────────────────────────────┐
│        INTERPRET RIV BASED ON NUMBER OF        │
│           DOWNLINK SCHEDULABLE RBs             │
└──────────────────────────────────────────────┘
                        │
                        ▼                 ⌐1820
┌──────────────────────────────────────────────┐
│     MAP SCHEDULED VIRTUAL RBs TO PHYSICAL      │
│    RBs TO DETERMINE ACTUALLY SCHEDULED         │
│       RBs AND RECEIVE PDSCH FROM RBs           │
└──────────────────────────────────────────────┘
```

# FIG.18

FIG.19

FIG.20

# EP 4 568 384 A1

## INTERNATIONAL SEARCH REPORT

| | International application No. |
|---|---|
| | **PCT/KR2023/011534** |

| A. | CLASSIFICATION OF SUBJECT MATTER |
|---|---|
| | **H04W 72/04**(2009.01)i; **H04W 72/23**(2023.01)i; **H04L 5/00**(2006.01)i; **H04L 5/14**(2006.01)i |

According to International Patent Classification (IPC) or to both national classification and IPC

| B. | FIELDS SEARCHED |
|---|---|

Minimum documentation searched (classification system followed by classification symbols)

H04W 72/04(2009.01); H04L 5/00(2006.01); H04L 5/14(2006.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PUSCH, DCI, FDRA(frequency domain resource assignment), UL symbol, 중첩 (overlap), first RBG, SBFD(sub band full duplex) symbol, second RBG, RRC, 사이즈(size), 비트 수(number of bits), UL BWP, bitmap

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2021-0377938 A1 (QUALCOMM INCORPORATED) 02 December 2021 (2021-12-02) See paragraphs [0034]-[0118]; claims 1-4 and 8; and figure 10. | 1,5,9,13 |
| Y | | 2-4,6-8,10-12,14-15 |
| Y | US 2022-0225362 A1 (OFINNO, LLC) 14 July 2022 (2022-07-14) See paragraphs [0225]-[0240]. | 2-4,6-8,10-12,14-15 |
| A | WO 2021-243300 A1 (QUALCOMM INCORPORATED) 02 December 2021 (2021-12-02) See paragraphs [0090]-[0166]; and figures 3D-12. | 1-15 |
| A | WO 2021-225656 A1 (QUALCOMM INCORPORATED) 11 November 2021 (2021-11-11) See paragraphs [0054]-[0093]; and figures 6-17. | 1-15 |

✓ Further documents are listed in the continuation of Box C.    ✓ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 November 2023** | **23 November 2023** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

70

## INTERNATIONAL SEARCH REPORT

International application No.

**PCT/KR2023/011534**

### C. DOCUMENTS CONSIDERED TO BE RELEVANT

| Category* | Citation of document, with indication, where appropriate, of the relevant passages | Relevant to claim No. |
|---|---|---|
| A | ERICSSON. Sub-band non-overlapping full duplex. R1-2204107, 3GPP TSG-RAN WG1 Meeting #109-e, e-Meeting. 29 April 2022.<br>See sections 2-5.2.2. | 1-15 |

**INTERNATIONAL SEARCH REPORT**
Information on patent family members

| | International application No. |
|---|---|
| | **PCT/KR2023/011534** |

| Patent document cited in search report | | | Publication date (day/month/year) | Patent family member(s) | | | Publication date (day/month/year) |
|---|---|---|---|---|---|---|---|
| US | 2021-0377938 | A1 | 02 December 2021 | CN | 115398850 | A | 25 November 2022 |
| | | | | EP | 4158834 | A1 | 05 April 2023 |
| | | | | TW | 202147902 | A | 16 December 2021 |
| | | | | WO | 2021-242931 | A1 | 02 December 2021 |
| US | 2022-0225362 | A1 | 14 July 2022 | None | | | |
| WO | 2021-243300 | A1 | 02 December 2021 | None | | | |
| WO | 2021-225656 | A1 | 11 November 2021 | BR | 112022021618 | A2 | 28 February 2023 |
| | | | | CN | 115398851 | A | 25 November 2022 |
| | | | | EP | 4147402 | A1 | 15 March 2023 |
| | | | | KR | 10-2023-0004551 | A | 06 January 2023 |
| | | | | TW | 202147879 | A | 16 December 2021 |
| | | | | US | 2023-0135832 | A1 | 04 May 2023 |

Form PCT/ISA/210 (patent family annex) (July 2022)